(19) Europäisches Patentamt
European Patent Office
Office européen des brevets

(11) **EP 4 761 310 A1**

(12) **EUROPEAN PATENT APPLICATION**
published in accordance with Art. 153(4) EPC

(43) Date of publication:
**17.06.2026 Bulletin 2026/25**

(21) Application number: **24853779.7**

(22) Date of filing: **13.08.2024**

(51) International Patent Classification (IPC):
**H04W 12/03** (2021.01)     **H04L 27/26** (2006.01)
**H04W 84/12** (2009.01)

(52) Cooperative Patent Classification (CPC):
**H04W 84/12; H04L 27/2602; H04W 12/03**

(86) International application number:
**PCT/CN2024/111899**

(87) International publication number:
**WO 2025/036371 (20.02.2025 Gazette 2025/08)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **16.08.2023 CN 202311037445**

(71) Applicant: **HUAWEI TECHNOLOGIES CO., LTD.
Shenzhen 518129 (CN)**

(72) Inventors:
• **DU, Rui**
  **Shenzhen, Guangdong 518129 (CN)**
• **SUN, Li**
  **Shenzhen, Guangdong 518129 (CN)**
• **LIU, Peng**
  **Shenzhen, Guangdong 518129 (CN)**
• **HAN, Xiao**
  **Shenzhen, Guangdong 518129 (CN)**

(74) Representative: **Gill Jennings & Every LLP
The Broadgate Tower
20 Primrose Street
London EC2A 2ES (GB)**

(54) **SENSING COMMUNICATION METHOD AND APPARATUS**

(57)    A sensing communication method and apparatus are applied to the field of communication technologies. This application may be applied to a wireless local area network system supporting a next-generation Wi-Fi protocol (for example, 802.11be, Wi-Fi 7, or EHT) of IEEE 802.11ax, a next-generation Wi-Fi protocol (for example, Wi-Fi 8 or UHR) of IEEE 802.11be, Wi-Fi AI, a millimeter wave (mmWave), an ultra-wideband (UWB), or sensing (sensing). For example, after generating a PPDU based on Q time-variant function values, a first communication apparatus sends the PPDU. After receiving the PPDU, a second communication apparatus may parse the PPDU based on the Q time-variant function values agreed on by the second communication apparatus and the first communication apparatus. According to the method provided in embodiments of this application, information transmission security is improved, and user privacy is effectively preserved.

FIG. 11

## Description

This application claims priority to Chinese Patent Application No. 202311037445.2, filed with the China National Intellectual Property Administration on August 16, 2023 and entitled "SENSING COMMUNICATION METHOD AND APPARATUS", which is incorporated herein by reference in its entirety.

## TECHNICAL FIELD

This application relates to the field of communication technologies, and in particular, to a sensing communication method and an apparatus.

## BACKGROUND

Institute of Electrical and Electronics Engineers (Institute of Electrical and Electronics Engineers, IEEE) 802.11bf is a next-generation wireless standard that focuses on sensing of passive objects (that is, targets do not carry any device). In the 802.11 bf standard, a Wi-Fi device may estimate a corresponding parameter (for example, a speed, a distance, or an angle) of a target and identify a subsequent action/behavior based on a signal received by the Wi-Fi device. The 802.11bf standard includes two major standards: a low frequency standard (for example, lower than 7 gigahertz (sub-7 GHz), and implemented mainly according to 802.11ac, 802.11ax, 802.11be, 802.11bn, and a next-generation standard) and a high frequency standard (for example, greater than or equal to 60 GHz, and implemented mainly according to 802.11ad, 802.11ay, and a next-generation standard).

During sensing, an illegitimate device may eavesdrop on a physical layer convergence procedure (physical layer convergence procedure, PLCP) protocol data unit (PHY protocol data unit, PPDU) sent in space; estimate channel information based on a physical layer header (PHY header) of the PPDU, for example, estimate channel state information (channel state information, CSI) or a channel impulse response (channel impulse response, CIR); and obtain information about a target from the channel information such as the CSI or the CIR.

Therefore, how to preserve user privacy is an urgent problem to be resolved currently.

## SUMMARY

Embodiments of this application provide a sensing communication method and an apparatus, to preserve user privacy and improve information security.

According to a first aspect, an embodiment of this application provides a sensing communication method. The method is applied to a first communication apparatus. The method includes: generating a physical layer convergence procedure PLCP protocol data unit PPDU based on $Q$ time-variant function values, where the $Q$ time-variant function values are used to scramble the PPDU, the $Q$ time-variant function values are determined according to $N_1$ time-variant functions, and a difference between any two of the $N_1$ time-variant functions meets a characteristic of varying with time, or a quotient of any two of the $N_1$ time-variant functions meets a characteristic of varying with time, where $N_1$ is an integer greater than or equal to 2, and $Q$ is an integer less than or equal to $N_1$; and sending the PPDU.

In embodiments of this application, the $Q$ time-variant function values are determined according to the $N_1$ time-variant functions that meet the foregoing characteristic, and the PPDU is scrambled based on the $Q$ time-variant function values. This can effectively improve transmission security of the PPDU, preserve privacy of a user (or referred to as a target), and implement secure sensing (secure sensing) (or referred to as privacy-preserving sensing).

In a possible implementation, a frequency range corresponding to the time-variant function is greater than a Doppler frequency range generated by a target.

In embodiments of this application, the frequency range corresponding to the time-variant function is greater than or equal to the Doppler frequency range generated by movement of the target, to effectively scramble the PPDU (for example, a PPDU in a sensing measurement exchange) in the sensing procedure, scramble information about the target, and mask real movement information of the target. This implements secure sensing.

In a possible implementation, a frequency range corresponding to the time-variant function in a sensing time window is greater than the Doppler frequency range generated by the target, and the sensing time window is a time window of a sensing procedure corresponding to a sensing application.

In embodiments of this application, the frequency range corresponding to the time-variant function in the sensing time window is greater than the Doppler frequency range generated by the target, to accurately scramble the PPDU within a specific frequency range, and mask real movement information of the target. This implements secure sensing.

In a possible implementation, the $Q$ time-variant function values are determined according to the $N_1$ time-variant functions and configuration information, and the configuration information includes at least one of the following: time t,

sampling start time $t_0$, a sampling interval (sampling interval) $\Delta T$, a sampling point n, a sampling start point $n_0$, and a selecting interval (selecting interval) T.

In a possible implementation, $N_1$ is less than or equal to $N_2$, and $N_2$ indicates a number of spatial streams used to transmit the PPDU; or $N_1$ is less than or equal to $N_3$, and $N_3$ indicates a number of antennas used to transmit the PPDU.

In a possible implementation, $N_1 = N_2 - 1$ or $N_1 = N_3 - 1$.

In a possible implementation, $N_1 = N_2$ or $N_1 = N_3$.

In embodiments of this application, the first communication apparatus may scramble the PPDU on $N_1$ spatial streams in the $N_2$ spatial streams used to transmit the PPDU, or scramble the PPDU on $N_1$ transmit antennas in the $N_3$ transmit antennas used to transmit the PPDU, to effectively implement secure sensing. If the first communication apparatus uses a same time-variant function value to scramble the PPDU transmitted on two spatial streams, an illegitimate device may offset the time-variant function value used for scrambling when receiving the PPDU and performing channel estimation based on the PPDU, to learn real channel information, and extract privacy information of the target from the real channel information. Therefore, according to the method provided in embodiments of this application, the privacy information of the target is effectively preserved.

In a possible implementation, the time-variant function value is used to scramble one or more fields following a legacy short training field (legacy short training field, L-STF) of the PPDU.

Usually, the L-STF may be used for PPDU discovery, coarse synchronization, and automatic gain control. Therefore, the first communication apparatus may not scramble the L-STF, and a function of the first communication apparatus is not affected. Certainly, the first communication apparatus may alternatively scramble the L-STF, to preserve the L-STF and prevent the field from being used for illegal sensing.

In a possible implementation, the time-variant function value is used to scramble at least one of a legacy long training field (legacy long training field, L-LTF), a legacy signal (legacy signal, L-SIG) field, a repeated legacy signal (repeated L-SIG, RL-SIG) field, and a universal signal (universal SIG, U-SIG) field of the PPDU.

In a possible implementation, the PPDU is an ultra-high reliability (ultra-high reliability, UHR) PPDU, and the time-variant function value may be further used to scramble at least one of a UHR-SIG field, a UHR-STF, and a UHR-LTF of the PPDU.

In a possible implementation, the PPDU is a millimeter wave (millimeter wave, MMW) PPDU (or an integrated millimeter wave (integrated MMW) PPDU), and the time-variant function value may be further used to scramble at least one of an MMW-SIG field (or an IMMW-SIG field), an MMW-STF (or an IMMW-STF), and an MMW-LTF (or an IMMW-LTF) of the PPDU.

In a possible implementation, the PPDU is used to carry at least one of the following frames: a sensing polling trigger frame, a sensing null data packet announcement (null data packet announcement, NDPA) frame (sensing NDP announcement frame), a sensing responder-to-sensing initiator (sensing responder to sensing initiator, SR2SI) sounding trigger frame (SR2SI sounding trigger frame), a sensing reporting trigger frame (sensing report trigger frame), a clear to send (clear to send, CTS)-to-self (CTS-to-self, CST2SELF) frame, and a sensing measurement report frame; or the PPDU is an NDP that does not include a data field, and the NDP is at least one of the following: a sensing initiator-to-sensing responder (sensing initiator to sensing responder, SI2SR) NDP, an SR2SI NDP, and a sensing responder-to-sensing responder (sensing responder to sensing responder, SR2SR) NDP.

In a possible implementation, before the generating the PPDU based on the Q time-variant function values, the method further includes: sending a sensing capabilities element, where the sensing capabilities element includes indication information, and the indication information indicates whether the first communication apparatus supports scrambling the PPDU based on the time-variant function value.

In embodiments of this application, in a sensing capabilities exchange phase, two communication parties may exchange sensing capabilities of each other. For example, the first communication apparatus may be a sensing initiator, and the sensing initiator may send the sensing capabilities element to a sensing responder. For another example, the first communication apparatus may be a sensing responder, and the sensing responder may send the sensing capabilities element to a sensing initiator.

In a possible implementation, before the generating the PPDU based on the Q time-variant function values, the method further includes: receiving a sensing capabilities element, where the sensing capabilities element includes indication information, and the indication information indicates whether a second communication apparatus supports descrambling the PPDU based on the time-variant function value.

In embodiments of this application, in a sensing capabilities exchange phase, two communication parties may exchange sensing capabilities of each other. For example, the first communication apparatus may be a sensing initiator, and the sensing initiator may receive the sensing capabilities element sent by a sensing responder. For another example, the first communication apparatus may be a sensing responder, and the sensing responder may receive the sensing capabilities element sent by a sensing initiator. When the first communication apparatus is a sensing initiator, the sensing initiator may send a secure parameter, index information, the configuration information, and the like. When the first communication apparatus is a sensing responder, the sensing responder may receive a secure parameter, index information, the configuration information, and the like.

In a possible implementation, before the generating the PPDU based on the Q time-variant function values, the method further includes: The sensing initiator sends the secure parameter, where the secure parameter is used to generate the $N_1$ time-variant functions; or the secure parameter is used to generate $N_1+x$ time-variant functions, and x is a positive integer.

In a possible implementation, before the generating the PPDU based on the Q time-variant function values, the method further includes: The sensing responder receives the secure parameter, where the secure parameter is used to generate the $N_1$ time-variant functions; or the secure parameter is used to generate $N_1+x$ time-variant functions, and x is a positive integer.

In embodiments of this application, the $N_1$ time-variant functions or the $N_1+x$ time-variant functions may form a time-variant function matrix, and two dimensions of the time-variant function matrix may be a time-variant function and time. For example, a row of the time-variant function matrix corresponds to a time-variant function, and a column of the time-variant function matrix corresponds to time. For another example, a column of the time-variant function matrix corresponds to a time-variant function, and a row of the time-variant function matrix corresponds to time.

In a possible implementation, before the generating the PPDU based on the Q time-variant function values, the method further includes: The sensing initiator sends the time-variant function matrix, where the row of the time-variant function matrix corresponds to a time-variant function, and the column of the time-variant function matrix corresponds to different time; or the column of the time-variant function matrix corresponds to a time-variant function, and the row of the time-variant function matrix corresponds to different time.

In a possible implementation, before the generating the PPDU based on the Q time-variant function values, the method further includes: The sensing responder receives the time-variant function matrix, where the row of the time-variant function matrix corresponds to a time-variant function, and the column of the time-variant function matrix corresponds to different time; or the column of the time-variant function matrix corresponds to a time-variant function, and the row of the time-variant function matrix corresponds to different time.

In a possible implementation, the method further includes: The sensing initiator sends the configuration information, where the configuration information includes at least one of the following: the time t, the sampling start time $t_0$, the sampling point n, the sampling start point $n_0$, and the selecting interval T.

In a possible implementation, the method further includes: The sensing responder receives the configuration information, where the configuration information includes at least one of the following: the time t, the sampling start time $t_0$, the sampling point n, the sampling start point $n_0$, and the selecting interval T.

In embodiments of this application, when the time-variant function is a continuous-time time-variant function, the configuration information may include the time t, the sampling start time $t_0$, and the selecting interval T. For example, time t corresponding to a current sensing measurement exchange is carried in a frame of the current sensing measurement exchange. Alternatively, a plurality of pieces of time t corresponding to a current sensing measurement session are carried in a sensing measurement request frame. For another example, a sampling start time $t_0$ and a selecting interval T that correspond to a current sensing measurement session are carried in a sensing measurement request frame.

In embodiments of this application, when the time-variant function is a discrete-time time-variant function, the configuration information may include the sampling start point $n_0$ and the sampling point n. For example, a sampling point corresponding to a current sensing measurement exchange is carried in a sensing measurement request frame. For another example, sampling start time and a sampling point that correspond to a current sensing measurement exchange are carried in a sensing measurement request frame. For another example, a sampling point corresponding to a current sensing measurement exchange is carried in a frame of the current sensing measurement exchange.

In a possible implementation, a frame of a sensing measurement exchange includes at least one of the following: a sensing polling trigger frame, a sensing null data packet announcement NDPA frame, a sensing responder-to-sensing initiator SR2SI sounding trigger frame, a sensing initiator-to-sensing responder SI2SR sounding trigger frame, and a sensing responder-to-sensing responder SR2SR sounding trigger frame.

In a possible implementation, the sampling point n corresponds to an identifier of a current sensing measurement exchange; or the sampling point n is carried in any one of the following: a sensing measurement request frame, a sensing polling trigger frame, a sensing null data packet announcement NDPA frame, a sensing responder-to-sensing initiator SR2SI sounding trigger frame, a sensing initiator-to-sensing responder SI2SR sounding trigger frame, and a sensing responder-to-sensing responder SR2SR sounding trigger frame.

In a possible implementation, when the secure parameter is used to generate the $N_1+x$ time-variant functions, or a number of time-variant functions in the time-variant function matrix is greater than $N_1$, the method further includes: The sensing initiator sends index information, where the index information indicates the $N_1$ time-variant functions in the time-variant function matrix or the $N_1+x$ time-variant functions.

In a possible implementation, when the secure parameter is used to generate the $N_1+x$ time-variant functions, or a number of time-variant functions in the time-variant function matrix is greater than $N_1$, the method further includes: The sensing responder receives index information, where the index information indicates the $N_1$ time-variant functions in the time-variant function matrix or the $N_1$+x time-variant functions.

In a possible implementation, before the generating the PPDU based on the Q time-variant function values, the method further includes: The sensing initiator sends the Q time-variant function values, where the Q time-variant function values are carried in at least one of a sensing polling trigger frame, a sensing null data packet announcement NDPA frame, a sensing responder-to-sensing initiator SR2SI sounding trigger frame, a sensing initiator-to-sensing responder SI2SR sounding trigger frame, and a sensing responder-to-sensing responder SR2SR sounding trigger frame in a current sensing measurement exchange; or the time-variant function values are carried in at least one of a sensing polling trigger frame, a sensing null data packet announcement NDPA frame, a sensing responder-to-sensing initiator SR2SI sounding trigger frame, a sensing initiator-to-sensing responder SI2SR sounding trigger frame, and a sensing responder-to-sensing responder SR2SR sounding trigger frame in a previous sensing measurement exchange.

In a possible implementation, before the generating the PPDU based on the Q time-variant function values, the method further includes: The sensing responder receives the Q time-variant function values, where the Q time-variant function values are carried in at least one of a sensing polling trigger frame, a sensing null data packet announcement NDPA frame, a sensing responder-to-sensing initiator SR2SI sounding trigger frame, a sensing initiator-to-sensing responder SI2SR sounding trigger frame, and a sensing responder-to-sensing responder SR2SR sounding trigger frame in current sensing measurement exchange; or the time-variant function values are carried in at least one of a sensing polling trigger frame, a sensing null data packet announcement NDPA frame, a sensing responder-to-sensing initiator SR2SI sounding trigger frame, a sensing initiator-to-sensing responder SI2SR sounding trigger frame, and a sensing responder-to-sensing responder SR2SR sounding trigger frame in previous sensing measurement exchange.

In a possible implementation, the Q time-variant function values are carried in the sensing NDPA frame in the current sensing measurement exchange, and the Q time-variant function values are used to scramble at least one of an SI2SR NDP or an SR2SI NDP following the sensing NDPA frame in the current sensing measurement exchange.

In a possible implementation, the Q time-variant function values are carried in the sensing responder-to-sensing initiator SR2SI sounding trigger frame in the current sensing measurement exchange, and the Q time-variant function values are used to scramble an SR2SI NDP following the SR2SI sounding trigger frame in the current sensing measurement exchange.

According to a second aspect, an embodiment of this application provides a sensing communication method. The method is applied to a second communication apparatus. The method includes:
receiving a physical layer convergence procedure PLCP protocol data unit PPDU; and parsing the PPDU based on Q time-variant function values, where the Q time-variant function values are used to descramble the PPDU, the Q time-variant function values are determined according to $N_1$ time-variant functions, and a difference between any two of the $N_1$ time-variant functions meets a characteristic of varying with time, or a quotient of any two of the $N_1$ time-variant functions meets a characteristic of varying with time, where $N_1$ is an integer greater than or equal to 2, and Q is an integer less than or equal to $N_1$.

In a possible implementation, a frequency range corresponding to the time-variant function is greater than a Doppler frequency range generated by a target.

In a possible implementation, a frequency range corresponding to the time-variant function in a sensing time window is greater than the Doppler frequency range generated by the target, and the sensing time window is a time window of a procedure corresponding to a sensing application.

In a possible implementation, the Q time-variant function values are determined according to the $N_1$ time-variant functions and configuration information, and the configuration information includes at least one of the following: time t, sampling start time $t_0$, a sampling interval $\Delta T$, a sampling point n, a sampling start point $n_0$, and a selecting interval T.

In a possible implementation, $N_1$ is less than or equal to $N_2$, and $N_2$ indicates a number of spatial streams used to transmit the PPDU; or $N_1$ is less than or equal to $N_3$, and $N_3$ indicates a number of antennas used to send the PPDU.

In a possible implementation, $N_1 = N_2 - 1$ or $N_1 = N_3 - 1$.

In a possible implementation, $N_1 = N_2$ or $N_1 = N_3$.

In a possible implementation, the time-variant function value is used to scramble one or more fields following a legacy short training field L-STF of the PPDU.

In a possible implementation, the time-variant function value is used to scramble at least one of a legacy long training field (legacy long training field, L-LTF), a legacy signal (legacy signal, L-SIG) field, a repeated legacy signal (repeated L-SIG, RL-SIG) field, and a universal signal (universal SIG, U-SIG) field of the PPDU.

In a possible implementation, the PPDU is a UHR PPDU, and the time-variant function value may be further used to scramble at least one of a UHR-SIG field, a UHR-STF, and a UHR-LTF of the PPDU.

In a possible implementation, the PPDU is an MMW PPDU, and the time-variant function value may be further used to scramble at least one of an MMW-SIG field, an MMW-STF, and an MMW-LTF of the PPDU.

In a possible implementation, the PPDU is used to carry at least one of the following frames: a sensing polling trigger frame, a sensing null data packet announcement NDPA frame, a sensing responder-to-sensing initiator SR2SI sounding trigger frame, a sensing reporting trigger frame, a clear to send-to-self CST2SELF frame, and a sensing measurement report frame; or the PPDU is an NDP that does not include a data field, and the NDP is at least one of the following: a sensing initiator-to-sensing responder SI2SR null data packet NDP, an SR2SI NDP, and an SR2SR NDP.

In a possible implementation, before the receiving the PPDU, the method further includes: receiving a sensing capabilities element, where the sensing capabilities element includes indication information, and the indication information indicates whether the first communication apparatus supports scrambling the PPDU based on the time-variant function value.

In a possible implementation, before the receiving the PPDU, the method further includes: sending a sensing capabilities element, where the sensing capabilities element includes indication information, and the indication information indicates whether the first communication apparatus supports scrambling the PPDU based on the time-variant function value.

In a possible implementation, before the receiving the PPDU, the method further includes: A sensing responder receives a secure parameter, where the secure parameter is used to generate the $N_1$ time-variant functions; or the secure parameter is used to generate $N_1+x$ time-variant functions, and x is a positive integer.

In a possible implementation, before the receiving the PPDU, the method further includes: A sensing initiator sends a secure parameter, where the secure parameter is used to generate the $N_1$ time-variant functions; or the secure parameter is used to generate $N_1+x$ time-variant functions, and x is a positive integer.

In a possible implementation, before the receiving the PPDU, the method further includes: The sensing responder receives a time-variant function matrix, where row of the time-variant function matrix corresponds to a time-variant function, and a column of the time-variant function matrix corresponds to different time; or a column of the time-variant function matrix corresponds to a time-variant function, and a row of the time-variant function matrix corresponds to different time.

In a possible implementation, before the receiving the PPDU, the method further includes: The sensing initiator sends a time-variant function matrix, where a row of the time-variant function matrix corresponds to a time-variant function, and a column of the time-variant function matrix corresponds to different time; or a column of the time-variant function matrix corresponds to a time-variant function, and a row of the time-variant function matrix corresponds to different time.

In a possible implementation, the method further includes: The sensing responder receives the configuration information, where the configuration information includes at least one of the following: the time t, the sampling start time $t_0$, the sampling point n, the sampling start point $n_0$, and the selecting interval T.

In a possible implementation, the method further includes: The sensing initiator sends the configuration information, where the configuration information includes at least one of the following: the time t, the sampling start time $t_0$, the sampling point n, the sampling start point $n_0$, and the selecting interval T.

For related descriptions of the configuration information, refer to the first aspect.

In a possible implementation, when the secure parameter is used to generate the $N_1+x$ time-variant functions, or a number of time-variant functions in the time-variant function matrix is greater than $N_1$, the method further includes: The sensing responder receives index information, where the index information indicates the $N_1$ time-variant functions in the time-variant function matrix or the $N_1+x$ time-variant functions.

In a possible implementation, when the secure parameter is used to generate the $N_1+x$ time-variant functions, or a number of time-variant functions in the time-variant function matrix is greater than $N_1$, the method further includes: The sensing initiator sends index information, where the index information indicates the $N_1$ time-variant functions in the time-variant function matrix or the $N_1+x$ time-variant functions.

In a possible implementation, the method further includes: The sensing responder receives the Q time-variant function values, where the Q time-variant function values are carried in at least one of a sensing polling trigger frame, a sensing null data packet announcement NDPA frame, a sensing responder-to-sensing initiator SR2SI sounding trigger frame, a sensing initiator-to-sensing responder SI2SR sounding trigger frame, and a sensing responder-to-sensing responder SR2SR sounding trigger frame in current sensing measurement exchange; or the Q time-variant function values are carried in at least one of a sensing polling trigger frame, a sensing null data packet announcement NDPA frame, a sensing responder-to-sensing initiator SR2SI sounding trigger frame, a sensing initiator-to-sensing responder SI2SR sounding trigger frame, and a sensing responder-to-sensing responder SR2SR sounding trigger frame in previous sensing measurement exchange.

In a possible implementation, the method further includes: The sensing initiator sends the Q time-variant function values, where the Q time-variant function values are carried in at least one of a sensing polling trigger frame, a sensing null data packet announcement NDPA frame, a sensing responder-to-sensing initiator SR2SI sounding trigger frame, a sensing initiator-to-sensing responder SI2SR sounding trigger frame, and a sensing responder-to-sensing responder SR2SR sounding trigger frame in a current sensing measurement exchange; or the Q time-variant function values are carried in at least one of a sensing polling trigger frame, a sensing null data packet announcement NDPA frame, a sensing responder-to-sensing initiator SR2SI sounding trigger frame, a sensing initiator-to-sensing responder SI2SR sounding trigger frame, and a sensing responder-to-sensing responder SR2SR sounding trigger frame in a previous sensing measurement exchange.

In a possible implementation, the Q time-variant function values are carried in the sensing NDPA frame in the current sensing measurement exchange, and the Q time-variant function values are used to scramble at least one of an SI2SR NDP or an SR2SI NDP following the sensing NDPA frame in the current sensing measurement exchange.

In a possible implementation, the Q time-variant function values are carried in the sensing responder-to-sensing initiator SR2SI sounding trigger frame in the current sensing measurement exchange, and the Q time-variant function values are used to scramble an SR2SI NDP following the SR2SI sounding trigger frame in the current sensing measurement exchange.

According to a third aspect, an embodiment of this application provides a sensing communication method. The method is applied to a first communication apparatus. The method includes:

> sending time-variant function information, where the time-variant function information indicates $N_1$ time-variant functions, and $N_1$ is a positive integer; and
> sending configuration information of the $N_1$ time-variant functions, where the configuration information is used to configure $N_1$ time-variant function values, and the $N_1$ time-variant function values are values of the $N_1$ time-variant functions at same time.

According to a fourth aspect, an embodiment of this application provides a sensing communication method. The method is applied to a second communication apparatus. The method includes:

> receiving time-variant function information, where the time-variant function information indicates $N_1$ time-variant functions, and $N_1$ is a positive integer; and
> receiving configuration information of the $N_1$ time-variant functions, where the configuration information is used to configure $N_1$ time-variant function values, and the $N_1$ time-variant function values are values of the $N_1$ time-variant functions at same time.

In a possible implementation method, the configuration information includes at least one of the following: time t, sampling start time $t_0$, a sampling point n, a sampling start point $n_0$, and a selecting interval T.

In embodiments of this application, for example, when the time-variant function is a continuous-time time-variant function, the configuration information may include at least one of the time t, the sampling start time $t_0$, and the selecting interval T. For example, the configuration information may include the time t. For another example, the configuration information may include the sampling start time $t_0$ and the selecting interval T. For another example, when the time-variant function is a discrete-time time-variant function, the configuration information may include at least one of the sampling start time $t_0$ (or the sampling start point $n_0$) and the sampling point n. For example, the configuration information may include the sampling point n. For another example, the configuration information may include the sampling point n and the sampling start time $t_0$.

In a possible implementation, the time-variant function information includes a secure parameter, where the secure parameter is used to generate the $N_1$ time-variant functions; or the secure parameter is used to generate $N_1+x$ time-variant functions, and x is a positive integer.

In a possible implementation, the method further includes: discretely sampling the $N_1$ time-variant functions/$N_1$+x time-variant functions based on the sampling interval $\Delta T$, to obtain a time-variant function matrix.

In embodiments of this application, the sampling interval $\Delta T$ is used to discretely sample the time-variant functions, and is a sampling interval of the discrete time-variant functions. The selecting interval T is used to obtain the time-variant function value from the discrete time-variant functions. Names of the sampling interval $\Delta T$ and the selecting interval T are merely examples. For example, the selecting interval T may also be referred to as an actual sampling interval. Specific names of the two intervals are not limited in embodiments of this application.

In a possible implementation, the time-variant function information includes a time-variant function matrix, where a row of the time-variant function matrix corresponds to a time-variant function, and a column of the time-variant function matrix corresponds to different time; or a column of the time-variant function matrix corresponds to a time-variant function, and a row of the time-variant function matrix corresponds to different time.

In embodiments of this application, the time-variant function matrix includes $N_1$ rows or $N_1$+x rows. Each row of the time-variant function matrix corresponds to one time-variant function.

In a possible implementation, the method further includes: A first communication apparatus sends index information, where the index information indicates the $N_1$ time-variant functions in the time-variant function matrix or the $N_1$+x time-variant functions.

In a possible implementation, the time-variant function information includes an index of a secure parameter, where the secure parameter is used to generate the $N_1$ time-variant functions; or the secure parameter is used to generate $N_1$+x time-variant functions, and x is a positive integer.

In embodiments of this application, the two communication parties may pre-store a plurality of groups of secure parameters, and each secure parameter may correspond to one index.

In a possible implementation, the time-variant function information includes indexes of the $N_1$ time-variant functions.

In a possible implementation, when the secure parameter is used to generate the $N_1+x$ time-variant functions, the method further includes:

The second communication apparatus receives index information, where the index information indicates the $N_1$ time-variant functions in the time-variant function matrix or the $N_1+x$ time-variant functions.

In a possible implementation, the time-variant function information and the configuration information are carried in a sensing measurement request frame, or the time-variant function information, the index information, and the configuration information are carried in a sensing measurement request frame.

In a possible implementation, the sampling point n corresponds to an identifier of a sensing measurement exchange.

In a possible implementation, the sampling point n or the time t is carried in a frame of a sensing measurement exchange.

In a possible implementation, the $N_1$ time-variant function values are used to scramble the PPDU.

According to a fifth aspect, an embodiment of this application provides a first communication apparatus, configured to perform the method in the first aspect or any possible implementation. The first communication apparatus includes a module that performs the method in the first aspect, the third aspect, or any possible implementation.

According to a sixth aspect, an embodiment of this application provides a second communication apparatus, configured to perform the method in the second aspect or any possible implementation. The second communication apparatus includes a module that performs the method in the second aspect, the fourth aspect, or any possible implementation.

According to a seventh aspect, an embodiment of this application provides a first communication apparatus. The first communication apparatus includes a processor, configured to perform the method in the first aspect, the third aspect, or any possible implementation. The processor is configured to execute a program stored in a memory. When the program is executed, the method in the first aspect or any possible implementation is performed.

In a possible implementation, the memory is located outside the first communication apparatus.

In a possible implementation, the memory is located inside the first communication apparatus.

In this embodiment of this application, the processor and the memory may alternatively be integrated into one component. In other words, the processor and the memory may alternatively be integrated together. For example, the first communication apparatus may be a chip.

In a possible implementation, the first communication apparatus further includes a transceiver. The transceiver is configured to receive or send information.

According to an eighth aspect, an embodiment of this application provides a second communication apparatus. The second communication apparatus includes a processor, configured to perform the method in the second aspect, the fourth aspect, or any possible implementation. The processor is configured to execute a program stored in a memory. When the program is executed, the method in the second aspect, the fourth aspect, or any possible implementation is performed.

In a possible implementation, the memory is located outside the second communication apparatus.

In a possible implementation, the memory is located inside the second communication apparatus.

In this embodiment of this application, the processor and the memory may alternatively be integrated into one component. In other words, the processor and the memory may alternatively be integrated together. For example, the second communication apparatus may be a chip.

In a possible implementation, the second communication apparatus further includes a transceiver. The transceiver is configured to receive or send information.

According to a ninth aspect, an embodiment of this application provides a first communication apparatus. The first communication apparatus includes a logic circuit and an interface. The logic circuit is coupled to the interface. The interface is configured to input and/or output information. The logic circuit is configured to perform the method in the first aspect, the third aspect, or any possible implementation.

In a possible implementation, that the interface is configured to output the information includes: The interface is configured to output a PPDU. For example, the logic circuit is configured to generate the PPDU.

According to a tenth aspect, an embodiment of this application provides a second communication apparatus. The second communication apparatus includes a logic circuit and an interface. The logic circuit is coupled to the interface. The interface is configured to input and/or output information. The logic circuit is configured to perform the method in the second aspect, the fourth aspect, or any possible implementation.

In a possible implementation, that the interface is configured to input the information includes: The interface is configured to input a PPDU. For example, the logic circuit is configured to parse the PPDU.

According to an eleventh aspect, an embodiment of this application provides a computer-readable storage medium. The computer-readable storage medium is configured to store a computer program, and when the computer program is run on a computer, the method in the first aspect, the second aspect, the third aspect, the fourth aspect, or any possible implementation is performed.

According to a twelfth aspect, an embodiment of this application provides a computer program product. The computer program product includes a computer program or computer code, and when the computer program product runs on a computer, the method in the first aspect, the second aspect, the third aspect, the fourth aspect, or any possible implementation is performed.

According to a thirteenth aspect, an embodiment of this application provides a computer program. When the computer program is run on a computer, the method in the first aspect, the second aspect, the third aspect, the fourth aspect, or any possible implementation is performed.

According to a fourteenth aspect, an embodiment of this application provides a communication system. The communication system includes a first communication apparatus and a second communication apparatus.

In a possible implementation, the first communication apparatus is configured to perform the method in the first aspect or any possible implementation of the first aspect, and the second communication apparatus is configured to perform the method in the second aspect or any possible implementation of the second aspect.

In a possible implementation, the first communication apparatus is configured to perform the method in the third aspect or any possible implementation of the third aspect, and the second communication apparatus is configured to perform the method in the fourth aspect or any possible implementation of the fourth aspect.

## BRIEF DESCRIPTION OF DRAWINGS

FIG. 1 is a diagram of an architecture of a communication system according to an embodiment of this application;
FIG. 2 is a diagram of phases of a sensing procedure according to an embodiment of this application;
FIG. 3 is a diagram of a format of a sensing capabilities element according to an embodiment of this application;
FIG. 4a is a schematic flowchart of a TB sensing measurement exchange according to an embodiment of this application;
FIG. 4b is a schematic flowchart of a non-TB sensing measurement exchange according to an embodiment of this application;
FIG. 5a is a diagram of a time-variant function according to an embodiment of this application;
FIG. 5b is a diagram of a real part and an imaginary part of a time-variant function according to an embodiment of this application;
FIG. 6a is a diagram of a time-variant function value exchange according to an embodiment of this application;
FIG. 6b is another diagram of a time-variant function value exchange according to an embodiment of this application;
FIG. 6c is still another diagram of a time-variant function value exchange according to an embodiment of this application;
FIG. 7a is a diagram of a format of a sensing measurement request frame according to an embodiment of this application;
FIG. 7b is a diagram of a format of another sensing measurement request frame according to an embodiment of this application;
FIG. 7c is a diagram of a format of still another sensing measurement request frame according to an embodiment of this application;
FIG. 8a is a diagram of a format of a sensing NDPA frame according to an embodiment of this application;
FIG. 8b is a diagram of a format of another sensing NDPA frame according to an embodiment of this application;
FIG. 8c is a diagram of a format of an SR2SI sounding trigger frame according to an embodiment of this application;
FIG. 9 is yet another diagram of a time-variant function value exchange according to an embodiment of this application;
FIG. 10 is still yet another diagram of a time-variant function value exchange according to an embodiment of this application;
FIG. 11 is a schematic flowchart of a sensing communication method according to an embodiment of this application;
FIG. 12a is a diagram of a partial process in which a first communication apparatus generates a PPDU according to an embodiment of this application;
FIG. 12b is a diagram of a partial process in which a second communication apparatus parses a PPDU according to an embodiment of this application;
FIG. 13 is a diagram of a communication apparatus according to an embodiment of this application;
FIG. 14 is a diagram of a communication apparatus according to an embodiment of this application; and
FIG. 15 is a diagram of a communication apparatus according to an embodiment of this application.

**DESCRIPTION OF EMBODIMENTS**

For ease of understanding technical solutions in this application, this application is further described below with reference to accompanying drawings.

In the specification, claims, and the accompanying drawings of this application, terms such as "first" and "second" are only intended to distinguish between different objects but do not describe a particular order. In addition, terms such as "include" and "have" and any other variants thereof are intended to cover a non-exclusive inclusion. For example, a process, a method, a system, a product, a device, or the like that includes a series of steps or units is not limited to the listed steps or units, but optionally further includes a step, a unit, or the like that is not listed, or optionally further includes another step or unit inherent to the process, the method, the product, the device, or the like.

An "embodiment" mentioned in the specification indicates that a particular feature, structure, or characteristic described with reference to this embodiment may be included in at least one embodiment of this application. The phrase shown in various locations in the specification may not necessarily refer to a same embodiment, and is not an independent or optional embodiment exclusive from another embodiment. It may be understood explicitly and implicitly by a person skilled in the art that embodiments described in the specification may be combined with other embodiment.

In this application, "at least one (piece)" means one or more, "a plurality of" means two or more, "at least two (pieces)" means two, three, or more, and "and/or" is used to describe an association relationship between associated objects, and indicates that three relationships may exist. For example, "A and/or B" may indicate the following three cases: Only A exists, only B exists, and both A and B exist, where A and B may be singular or plural. "Or" indicates that two relationships may exist, for example, only A exists and only B exists. When A and B are not mutually exclusive, it may indicate that three relationships exist, for example, only A exists, only B exists, and both A and B exist. The character "/" usually indicates an "or" relationship between the associated objects. "At least one of the following items (pieces)" or a similar expression thereof means any combination of these items. For example, at least one of a, b, or c may represent: a, b, c, "a and b", "a and c", "b and c", or "a, b, and c".

Embodiments of this application provide a sensing communication method and an apparatus. A PPDU is scrambled based on a time-variant function value, to effectively improve transmission security of the PPDU. Further, transmission security of the PPDU is improved, to scramble information about a target, and effectively mask actual information related to the target. Therefore, an illegitimate device cannot obtain the information related to the target, to preserve user privacy and implement secure sensing.

The following describes a communication system in embodiments of this application.

The technical solutions provided in embodiments of this application may be applied to a wireless local area network (wireless local area network, WLAN) system, for example, Wi-Fi. For example, the method provided in embodiments of this application is applicable to the IEEE 802.11 series protocols, for example, the 802.11a/b/g protocol, the 802.11bf protocol, the 802.11n protocol, the 802.11ac protocol, the 802.11ax protocol, the 802.11be protocol, and the 802.11bn protocol or a next-generation protocol. Examples are not enumerated. The technical solutions provided in embodiments of this application may be further applied to a wireless personal area network (wireless personal area network, WPAN) based on an ultra-wideband (ultra-wideband, UWB) technology. The technical solutions provided in embodiments of this application may be further applied to a millimeter wave (millimeter wave, MMW) technology, including an IMMW. For example, the method provided in embodiments of this application is applicable to the IEEE 802.15 series protocols, for example, the 802.15.4a protocol, the 802.15.4z protocol, the 802.15.4ab protocol, or a future generation UWB WPAN protocol. Examples are not enumerated. The technical solutions provided in embodiments of this application may be further applied to the following communication systems: for example, an Internet of things (Internet of things, IoT) system, a vehicle-to-everything (vehicle to X, V2X) system, a narrowband Internet of things (narrowband Internet of things, NB-IoT) system, a long term evolution (long term evolution, LTE) system, a 5th generation (5th-generation, 5G) communication system, and a new communication system that emerges in future communication development.

The WLAN system can provide high-speed and low-latency transmission. With continuous evolution of WLAN application scenarios, the WLAN system is to be applied to more scenarios or industries, for example, the Internet of things industry, the vehicle-to-everything industry, the banking industry, enterprise offices, exhibition halls of stadiums, concert halls, hotel rooms, dormitories, wards, classrooms, supermarkets, squares, streets, production workshops and warehousing. Certainly, a device (for example, an access point or a station) that supports WLAN communication or sensing may be a sensor node (for example, a smart water meter, a smart electricity meter, or a smart air detection node) in a smart city, a smart device (for example, a smart camera, a projector, a display, a television, a speaker, a refrigerator, and a washing machine) in a smart home, an Internet of things node, an entertainment terminal (for example, a wearable device such as augmented reality (augmented reality, AR) or virtual reality (virtual reality, VR)), an intelligent device (for example, a printer, a projector, a loudspeaker, or a speaker) in intelligent office, an Internet of vehicles device in the Internet of vehicles, an infrastructure in a daily life scenario (for example, a vending machine, a self-service navigation console of a shopping mall/supermarket, a self-service cashier device, and a self-service ordering machine), a device in a large sports and music venue, and the like.

Although embodiments of this application mainly use a WLAN as an example, embodiments of this application are especially applied to a network of the IEEE 802.11 series standards. Embodiments of this application can support Wi-Fi 8, which may also be referred to as ultra-high reliability (ultra-high reliability, UHR) or ultra-high reliability and throughput (ultra-high reliability and throughput, UHRT). Examples are not enumerated herein. Aspects in embodiments of this application may be extended to other networks using various standards or protocols, for example, Bluetooth (Bluetooth), a high performance radio LAN (high performance radio LAN, HIPERLAN) (a wireless standard similar to the IEEE 802.11 standard, and mainly used in Europe), a wide area network (wide area network, WAN), or other networks known or developed in the future.

In a possible implementation, the method provided in embodiments of this application may be implemented by a communication apparatus in a communication system. For example, the communication apparatus may be an access point (access point, AP) or a station (station, STA).

The access point is an apparatus having a wireless communication function, supports communication or sensing according to a WLAN protocol, has a function of communicating with or sensing another device (for example, a non-AP STA or another access point) in a WLAN network, and certainly may also have a function of communicating with or sensing another device. Alternatively, the access point is equivalent to a bridge that connects a wired network and a wireless network. A main function of the access point is to connect various wireless network clients together and then connect the wireless network to the Ethernet. In a WLAN system, the access point may be referred to as an access point station (AP STA). The apparatus having a wireless communication function may be an entire device, or may be a chip, a processing system, a functional module, or the like installed in an entire device. The device in which the chip, the processing system, or the functional module is installed may implement the method, the functions, and the like in embodiments of this application under control of the chip, the processing system, or the functional module. The AP in embodiments of this application is an apparatus that provides a service for the non-AP STA, and may support the 802.11 series protocols or subsequent protocols, or the like. For example, the access point may be an access point for a terminal (for example, a mobile phone) to access a wired (or wireless) network, and is mainly deployed at home, inside a building, and inside a campus. A typical coverage radius is tens of meters to over one hundred meters. Certainly, the access point may alternatively be deployed outdoors. For another example, the AP may be a communication entity, for example, a communication server, a router, a switch, or a bridge, or the AP may include various forms of macro base stations, micro base stations, relay stations, and the like. Certainly, the AP may alternatively be a chip, a processing system, or a module in these devices in various forms, to implement the method and the functions in embodiments of this application.

The STA is an apparatus having a wireless communication function, supports communication or sensing according to the WLAN protocol, and has a capability of communicating with or sensing another non-AP STA or access point in the WLAN network. In the WLAN system, the station may be referred to as a non-access point station (non-access point station, non-AP STA). For example, the STA is any user communication device that allows a user to communicate with or sense an AP and further communicate with a WLAN. The apparatus having a wireless communication function may be an entire device, or may be a chip, a processing system, or a functional module installed in an entire device. A device in which the chip, the processing system, or the functional module is installed may implement the method and the functions in embodiments of this application under control of the chip, the processing system, or the functional module. For example, the STA may be a wireless communication chip, a wireless sensor, or a wireless communication terminal, and may also be referred to as a user. For another example, the STA may be a mobile phone that supports a Wi-Fi communication function, a tablet computer that supports a Wi-Fi communication function, a set-top box that supports a Wi-Fi communication function, a smart television that supports a Wi-Fi communication function, a smart wearable device that supports a Wi-Fi communication function, a vehicle-mounted communication device that supports a Wi-Fi communication function, and a computer that supports a Wi-Fi communication function. Certainly, the STA may alternatively be a chip, a processing system, or a module in these devices in various forms, to implement the method and the functions in embodiments of this application.

For example, a communication system to which the method provided in embodiments of this application may be applied may include an access point and a station. For example, embodiments of this application are applicable to a scenario of communication or sensing between an AP and a STA, between APs, or between STAs in the WLAN. This is not limited in embodiments of this application. Optionally, the AP may communicate with or sense a single STA, or the AP may simultaneously communicate with or sense a plurality of STAs. Specifically, communication or sensing between the AP and the plurality of STAs may be further classified into downlink transmission in which the AP simultaneously sends signals to the plurality of STAs, and uplink transmission in which the plurality of STAs send signals to the AP. The AP and the STA, the APs, and the STAs may support WLAN communication protocols. The communication protocols may include the IEEE 802.11 series protocols, for example, the 802.11n/802.11ac/802.11ax/802.11be/802.11bn protocol is applicable, and certainly a protocol later than 802.11bn is also applicable.

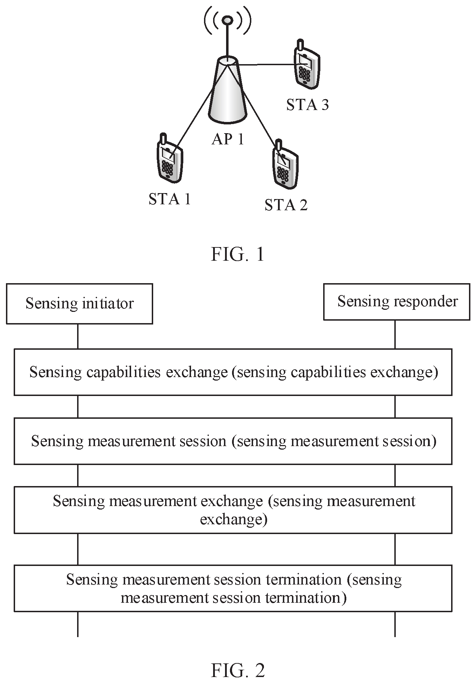

FIG. 1 is a diagram of an architecture of a communication system according to an embodiment of this application. The communication system may include one or more APs and one or more STAs. FIG. 1 shows one access point, for example, an AP 1, and three stations, for example, a STA 1, a STA 2, and a STA 3. For example, a method provided in embodiments of this application is applicable to data communication between one AP and one or more STAs (for example, communication between the AP 1 and the STA 1 or communication between the AP 1 and the STA 1 and the STA 2 shown in FIG. 1), communication between APs (for example, communication between the AP 1 and the AP 2 shown in FIG. 1), or communication between STAs (for example, communication between the STA 2 and the STA 3 shown in FIG. 1). The method provided in embodiments of this application is applicable to but not limited to single-user uplink/downlink transmission, multi-user uplink/downlink transmission, vehicle-to-everything (vehicle-to-everything, V2X, where X may represent everything), and device-to-device (device-to-device, D2D). For example, the V2X may include vehicle-to-vehicle (vehicle-to-vehicle, V2V), vehicle-to-infrastructure (vehicle-to-infrastructure, V2I), vehicle-to-pedestrian (vehicle-to-pedestrian, V2P) communication, or vehicle-to-network (vehicle-to-network, V2N) communication, and the like.

It can be understood that, in FIG. 1, an example in which the STA is a mobile phone and the AP is a router is used. This does not mean that types of the AP and the STA in embodiments of this application are limited. In addition, FIG. 1 shows only one AP and three STAs as an example. There may be more or less APs or STAs. This is not limited in embodiments of this application.

From different perspectives of sending a PPDU and receiving a PPDU, in the following, a first communication apparatus may be a communication apparatus that sends a PPDU, and a second communication apparatus may be a communication apparatus that receives a PPDU. In an example, the first communication apparatus and the second communication apparatus may be Wi-Fi chips, modules, or processing systems disposed in different Wi-Fi devices. In another example, the first communication apparatus may be an AP, and the second communication apparatus may be a STA. In still another example, both the first communication apparatus and the second communication apparatus may be STAs or APs. In yet another example, the first communication apparatus may be a STA, and the second communication apparatus may be an AP. In still yet another example, at least one of the first communication apparatus and the second communication apparatus may be a multi-link device (multi-link device, MLD). Examples are not enumerated in embodiments of this application. For example, the multi-link device (multi-link device, MLD) is a device that simultaneously includes a plurality of stations (for example, APs or non-AP STAs) respectively operating on different frequency bands or channels. The multi-link device includes a plurality of affiliated stations. The affiliated stations may be physical stations, or may be logical stations. Each station may operate on one link, one frequency band, one channel, or the like. The affiliated station may be an AP or a non-AP STA. The multi-link device (for example, a non-AP MLD or an AP MLD) may be a communication apparatus having a wireless communication function. The communication apparatus may be an entire device, or may be a chip, a processing system, or a module installed in an entire device. The device in which the chip, the processing system, or the module is installed may implement the method and the functions in embodiments of this application under control of the chip, the processing system, or the module. The multi-link device may implement wireless communication according to the 802.11 series protocols, to communicate with another device. The another device herein may be a multi-link device, or may not be a multi-link device. Frequency bands on which the multi-link device operates may include but are not limited to sub-1 GHz, 2.4 GHz, 5 GHz, 6 GHz, and the like. Examples are not enumerated herein.

From a perspective of role positioning in the 802.11 bf standard, in the following, the first communication apparatus may be a sensing initiator (sensing initiator), and the second communication apparatus may be a sensing responder (sensing responder); or the first communication apparatus may be a sensing responder, and the second communication apparatus may be a sensing initiator; or the first communication apparatus may be a sensing transmitter (sensing transmitter), and the second communication apparatus may be a sensing receiver (sensing receiver). For example, the sensing initiator may be a device or a chip that initiates a sensing session. For example, the sensing initiator may send a sensing measurement request (sensing measurement request) frame on sub-7 GHz, or send a directional multi-gigabit (directional multi-gigabit, DMG) sensing measurement request frame on a high frequency. The sensing responder may be a device, a chip, or the like that responds to sensing initiated by the sensing initiator and that participates in sensing. The sensing transmitter may be a device, a chip, or the like that sends a sensing PPDU (for example, an SI2SR NDP, an SR2SI NDP, or an SR2SR NDP). The sensing receiver may be a device, a chip, or the like that receives the sensing PPDU.

In embodiments of this application, the method provided in embodiments of this application is described from two sides: the first communication apparatus and the second communication apparatus. However, in a process in which the first communication apparatus and the second communication apparatus transmit a PPDU, the PPDU may be further forwarded by using another apparatus, for example, a PPDU between the first communication apparatus and the second communication apparatus is forwarded by using a forwarding apparatus. An apparatus other than the first communication apparatus and the second communication apparatus is not limited in embodiments of this application.

The following describes a sensing communication method in embodiments of this application.

FIG. 2 is a diagram of phases of a sensing procedure according to an embodiment of this application. In the 802.11bf standard, sensing devices first exchange capabilities of the devices, as shown in a sensing capabilities exchange (sensing capabilities exchange) phase in FIG. 2. The sensing devices can learn sensing capabilities of each other by exchanging basic capabilities. For example, a sensing initiator may send a sensing capabilities element to a sensing responder, and the sensing capabilities element may carry a sensing capability of the sensing initiator. The sensing responder may send a sensing capabilities element to the sensing initiator, and the sensing capabilities element may carry a sensing capability of the sensing responder.

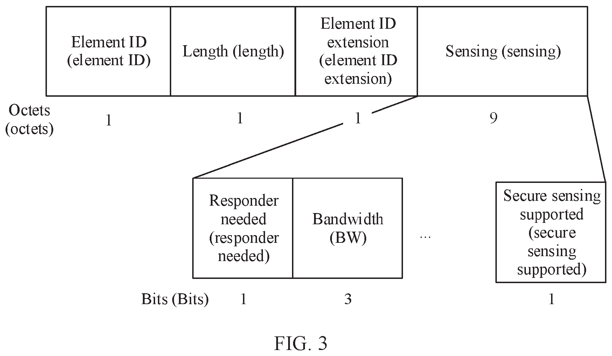

FIG. 3 is a diagram of a format of a sensing capabilities element according to an embodiment of this application. As shown in FIG. 3, the sensing capabilities element may include the following fields: an element ID (element ID), a length (length), element ID extension (element ID extension), and sensing (sensing). For example, the sensing field may include a secure sensing supported (secure sensing supported) field. The secure sensing supported field may occupy 1 bit. The secure sensing supported field may carry indication information, and the indication information may indicate whether secure sensing is supported. In other words, two communication parties can exchange privacy-preserving sensing capabilities (or referred to as privacy-enhancement sensing capabilities) by exchanging sensing capabilities elements. For example, a value of the secure sensing field is 1. It indicates that secure sensing is supported. For example, a first communication apparatus supports scrambling a PPDU based on a time-variant function value, and a second communication apparatus supports descrambling the PPDU based on the time-variant function value. When the value of the secure sensing field is 1, the two communication parties may determine the time-variant function value through exchanging. For example, the two communication parties may exchange at least one of a secure parameter, configuration information, and index information. For another example, the two communication parties may exchange a time-variant function matrix. Examples are not enumerated herein. For a specific manner in which the two communication parties determine the time-variant function value through exchanging, refer to the following implementation 1 to implementation 6. For another example, a value of the secure sensing field is 0. It indicates that secure sensing is not supported. For example, a first communication apparatus does not support scrambling a PPDU based on a time-variant function value, and a second communication apparatus does not support descrambling the PPDU based on the time-variant function value. The secure sensing supported field shown in this embodiment of this application may also be referred to as a privacy-preserving sensing (privacy-preserving sensing) field or the like. A specific name of the secure sensing supported field is not limited in this embodiment of this application.

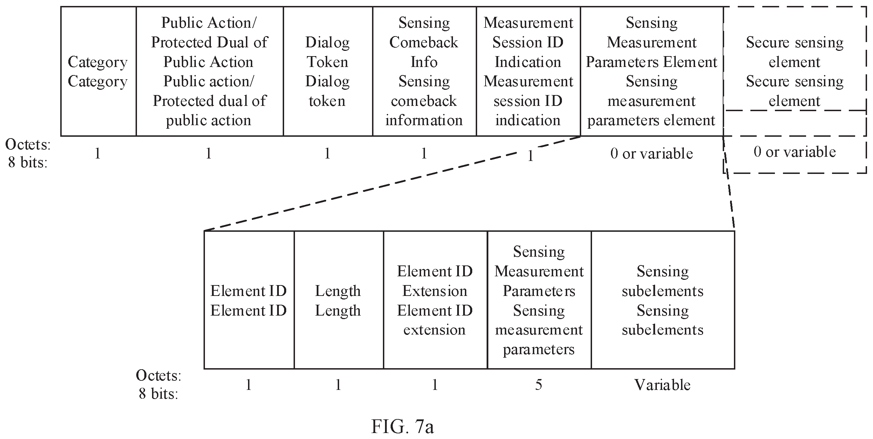

After the sensing devices complete capabilities exchanging, when a sensing measurement session (sensing measurement session) needs to be initiated, the sensing initiator may initiate setup of the sensing measurement session by sending a sensing measurement request (sensing measurement request) frame, and the sensing responder receives the sensing measurement request frame and replies with a sensing measurement response (sensing measurement response) frame. The sensing initiator may allocate different roles and parameters to different sensing responders for different applications in the sensing measurement session phase, to complete setup of the sensing measurement session. In the sensing measurement session phase, related parameters in sensing are mainly negotiated, for example, a receiving/transmitting role of a device, sensing bandwidth, whether a channel state information (channel state information, CSI) matrix needs to be fed back, and whether a sensing measurement report frame needs to be fed back. For specific descriptions of the sensing measurement request frame, refer to FIG. 7a to FIG. 7c in the following. Details are not described herein.

After the sensing measurement session is set up, the sensing initiator may initiate one or more sensing measurement exchanges (sensing measurement exchange). The sensing measurement exchanges may be classified into a trigger-based (trigger-based, TB) sensing measurement exchange (TB sensing measurement instance) and a non-trigger-based (non-trigger-based, Non-TB) sensing measurement exchange (Non-TB sensing measurement instance). The TB sensing measurement exchange is usually initiated by an AP, and the non-TB sensing measurement exchange is usually initiated by a STA.

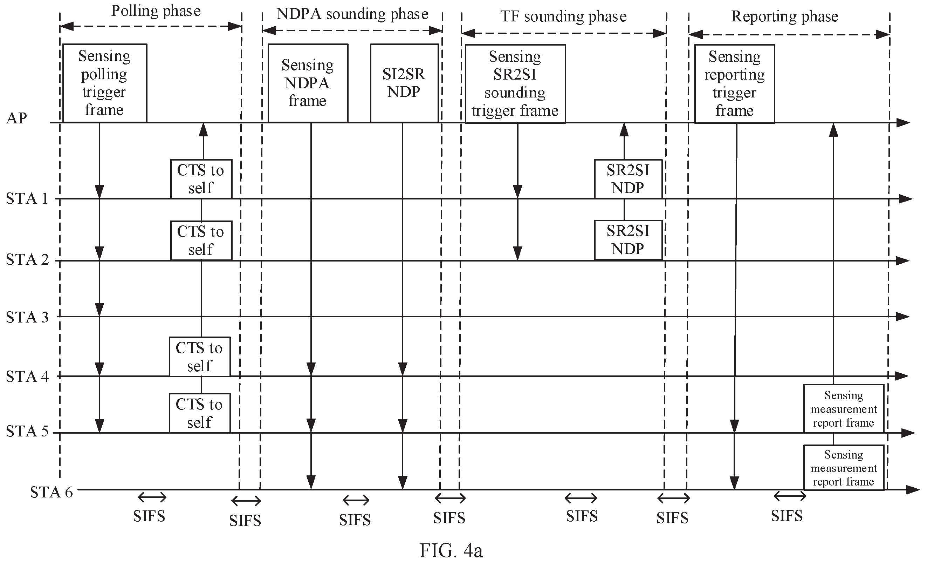

FIG. 4a is a schematic flowchart of a TB sensing measurement exchange according to an embodiment of this application. As shown in FIG. 4a, the TB sensing measurement exchange may include at least one of the following phases: a polling (polling) phase, an NDPA sounding (sounding) phase, a trigger frame (trigger frame, TF) sounding (TF sounding) phase, and a reporting (reporting) phase.

In the TB sensing measurement exchange scenario, an AP that serves as a sensing initiator may send a sensing polling trigger frame to a STA that the AP wants to invite to participate in current exchange measurement in the polling phase, to invite each STA to participate. The STA participating in the exchange may reply with a CTS-to-self frame for acknowledgment. As shown in FIG. 4a, the AP may invite a STA 1 to a STA 5 to participate in the current sensing measurement exchange. The STA 1, a STA 2, a STA 4, and the STA 5 acknowledge participation in the current sensing measurement exchange. In the NDPA sounding phase, the AP sends a sensing NDPA frame to a plurality of responders that acknowledge participation in NDPA sounding, and sends an SI2SR NDP after a short interframe space (short interframe space, SIFS). The responders receive the SI2SR NDP based on information in the sensing NDPA frame, to implement sensing measurement. In the TF sounding phase, the AP sends a sensing SR2SI sounding trigger frame to a plurality of responders that acknowledge participation in TF sounding, and the responders send SR2SI NDPs based on information allocated by the SR2SI sounding trigger frame, to implement sensing measurement. In the reporting phase, the AP may send a sensing reporting trigger frame to a plurality of responders that acknowledge participation in the reporting phase, and the responders send sensing measurement report frames based on the sensing reporting trigger frame. Roles of the STA 1 to a STA 3 in FIG. 4a may be sensing transmitters, and roles of the STA 4 to a STA 6 may be sensing receivers. When the AP sends the sensing polling trigger frame to the STA 1 to the STA 5, the STA 3 does not reply with a CTS-to-self frame. Therefore, the STA 3 does not participate in the sensing procedure.

As the standard progresses, a specific procedure of the TB sensing measurement exchange may change. Therefore, the procedure of the TB sensing measurement exchange shown in FIG. 4a is merely an example, and should not be understood as a limitation on embodiments of this application.

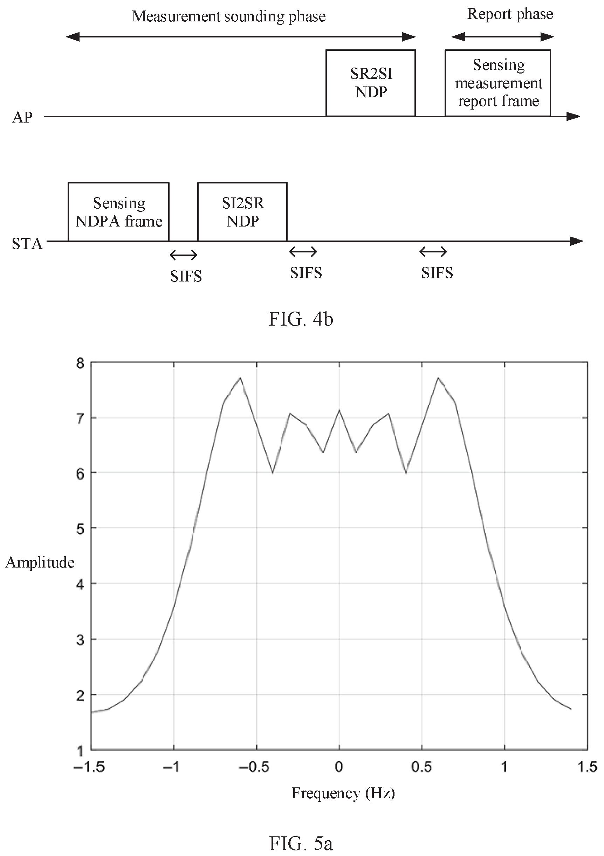

FIG. 4b is a schematic flowchart of a non-TB sensing measurement exchange according to an embodiment of this application. In the non-TB sensing measurement exchange scenario, a STA that serves as a sensing initiator may send a sensing NDPA frame, and send an SI2SR NDP after an SIFS. An AP that serves as a sensing responder sends an SR2SI NDP after an SIFS. The AP that serves as the sensing responder responds with the SR2SI NDP frame. After the SIFS, the reporting phase is performed. The AP includes a result obtained through measurement in a sensing measurement report frame, and feeds back the sensing measurement report frame to the sensing initiator. A sensing measurement exchange shown below in embodiments of this application may include a trigger-based sensing measurement exchange, or may include a non-trigger-based sensing measurement exchange.

The TB sensing measurement exchange and the non-TB sensing measurement exchange shown above are merely examples, and FIG. 4a and FIG. 4b show the basic procedures thereof. A TB sensing measurement exchange may include one or more of the following phases: a polling phase, a TF sounding phase, an NDPA sounding phase, or a reporting phase. There are a plurality of potential variants. Examples are not enumerated herein. For example, a sensing measurement exchange may include a TF sounding phase (without a polling phase, an NDPA sounding phase, and a reporting phase); or include a polling phase and an NDPA sounding phase (without a TF sounding phase and a reporting phase); or include a polling phase and a TF sounding phase (without an NDPA sounding phase and a reporting phase). Examples are not enumerated herein.

The frames shown in FIG. 4a and FIG. 4b may be carried in a PPDU, and each NDP may be referred to as a PPDU without a data field. For ease of description, in the following specific examples, the PPDU is used as an example to represent a frame or an NDP. In other words, the PPDU shown below may be used to carry at least one of a sensing polling trigger frame, a sensing NDPA frame, a sensing SR2SI sounding trigger frame, a sensing reporting trigger frame, or the like. The PPDU shown below may be at least one of an SI2SR NDP, an SR2SI NDP, or an SR2SR NDP.

After a period of time, if the sensing initiator or the sensing responder does not need the sensing measurement session, the sensing initiator or the sensing responder may terminate the sensing session by sending a sensing measurement session termination frame, as shown in a sensing measurement session termination phase in FIG. 2.

The sensing procedure shown in FIG. 2 may be applied to different sensing applications. For example, the sensing initiator may initiate a sensing procedure for a fall detection application. In a sensing measurement exchange phase, the sensing initiator may detect information about a target by sending several PPDUs. For another example, the sensing initiator may initiate a sensing procedure for a breathing detection application. In a sensing measurement exchange phase, the sensing initiator may also detect information about a target by sending several PPDUs. The information about the target herein may include motion of the target and the like. The target detected through the sensing procedure may be in a moving state or a static state. This is not limited in embodiments of this application. One sensing application may correspond to one sensing measurement session or a plurality of sensing measurement sessions. When one sensing application corresponds to one sensing measurement session, a time-variant function matrix shown below may correspond to one sensing measurement session. When one sensing application corresponds to a plurality of sensing measurement sessions, the time-variant function matrix shown below may correspond to a plurality of sensing measurement sessions, or the time-variant function matrix may be updated after one sensing measurement session is terminated. A relationship between the sensing application, the sensing measurement session, and the time-variant function matrix is not limited in embodiments of this application. The procedures shown in FIG. 2, FIG. 4a, and FIG. 4b are applicable to the following descriptions.

The procedures shown in FIG. 2, FIG. 4a, and FIG. 4b are merely examples. As the standard progresses, the sensing procedure or the sensing measurement exchange procedure may change. Therefore, the procedures shown in FIG. 2, FIG. 4a, and FIG. 4b should not be understood as a limitation on embodiments of this application.

The following describes in detail a time-variant function, a time-variant function matrix, and a time-variant function value in embodiments of this application.

From a time domain dimension, the time-variant function is a function that slowly varies with time. From a frequency domain dimension, the time-variant function meets a low-pass characteristic in frequency domain, or the time-variant function has specific bandwidth after being converted to frequency domain and covers a specific frequency range. The time-variant function may also be referred to as a slow-variant function or the like. A specific name of the time-variant function is not limited in embodiments of this application. The time-variant function value is determined according to the time-variant function. For example, the time-variant function value may be a specific value of the time-variant function at specific time.

To fully use multi-antenna resources, signals sent on a plurality of antennas/spatial streams/channels (for example, channels of radio frequency links or transmit channels) may be scrambled according to a plurality of time-variant functions. A plurality of time-variant function values may be determined according to the plurality of time-variant functions, for example, Q time-variant function values, where $Q=N_1$ or $Q<N_1$. For example, the first communication apparatus may scramble a PPDU based on the $N_1$ time-variant function values, and the second communication apparatus descrambles the PPDU based on the $N_1$ time-variant function values. The $N_1$ time-variant function values are determined according to $N_1$ time-variant functions. For example, the $N_1$ time-variant function values are values of the $N_1$ time-variant functions at same time. $N_1$ may be a positive integer.

In embodiments of this application, the $N_1$ time-variant function values corresponding to each sensing measurement exchange are determined according to the $N_1$ time-variant functions. Therefore, during specific implementation, two sensing measurement exchanges may correspond to same $N_1$ time-variant function values. However, for one sensing measurement exchange, at least two time-variant function values in the $N_1$ time-variant function values corresponding to the sensing measurement exchange are different. For example, at least two time-variant function values in $N_1$ time-variant function values corresponding to a first sensing measurement exchange and $N_1$ time-variant function values corresponding to a second sensing measurement exchange may be the same, or the $N_1$ time-variant function values corresponding to the first sensing measurement exchange may each be different from the $N_1$ time-variant function values corresponding to the second sensing measurement exchange.

For example, $N_1$ is less than or equal to $N_2$, $N_2$ indicates a number of spatial streams used to transmit the PPDU, and $N_2$ is a positive integer. For example, when the first communication apparatus transmits the PPDU on the $N_2$ spatial streams, and the PPDU transmitted on a first spatial stream (which is merely an example) in the $N_2$ spatial streams is not scrambled based on the time-variant function values, $N_1 = N_2 - 1$. The PPDU transmitted on the $N_2-1$ spatial streams other than the first spatial stream is scrambled based on the time-variant function values. Certainly, the PPDU transmitted on each of the $N_2$ spatial streams may alternatively be scrambled based on the time-variant function values, for example, $N_1=N_2$. In this embodiment of this application, the $N_1$ time-variant functions (or the $N_1$ time-variant function values) sequentially correspond to the $N_2-1$ spatial streams or the $N_2$ spatial streams.

For another example, $N_1$ is less than or equal to $N_3$, $N_3$ indicates a number of transmit antennas used to send the PPDU (or referred to as a number of transmit antennas used to transmit the PPDU), and $N_3$ is a positive integer. For example, when the first communication apparatus sends the PPDU on the $N_3$ transmit antennas, and no time-variant function is applied to a first transmit antenna (or a first user) (which is merely an example), $N_1 = N_3 - 1$. $N_3-1$ time-variant function values may be determined according to $N_3-1$ time-variant functions, and $N_3-1$ transmit antennas other than the first transmit antenna each may correspond to one time-variant function value. For example, the first communication apparatus scrambles the PPDU based on a time-variant function value corresponding to a second transmit antenna, and sends the scrambled PPDU on the second transmit antenna. For another example, the first communication apparatus scrambles the PPDU based on a time-variant function value corresponding to an $(N_3-1)^{th}$ transmit antenna, and sends the scrambled PPDU on the $(N_3-1)^{th}$ transmit antenna. Certainly, the PPDU transmitted on each of the $N_3$ transmit antennas may alternatively be scrambled based on the time-variant function values, for example, $N_1=N_3$. In this embodiment of this application, the $N_1$ time-variant functions (or the $N_1$ time-variant function values) sequentially correspond to the $N_3-1$ transmit antennas or the $N_3$ transmit antennas.

Usually, after a sensing measurement session is set up, $N_2$ or $N_3$ is determined. In a plurality of sensing measurement exchanges corresponding to one sensing measurement session, a number of spatial streams used to transmit the PPDU or a number of transmit antennas used to transmit the PPDU cannot be increased but may be reduced. For example, after the sensing measurement session is set up, it is determined that there are three antennas (for example, $N_1=3$). If one antenna cannot be used in a sensing measurement exchange, the remaining two antennas may be used, the PPDU is scrambled based on time-variant function values (for example, $Q=2$) corresponding to the two antennas, and the PPDU is sent on the two antennas. Time-variant functions corresponding to the time-variant function values used on the two antennas remain unchanged.

Usually, the $N_1$ time-variant function values may be determined according to the $N_1$ time-variant functions. The first communication apparatus may scramble the PPDU based on the $N_1$ time-variant function values (for example, $Q=N_1$), and the second communication apparatus may descramble the PPDU based on the $N_1$ time-variant function values. However, during specific implementation, for example, due to a decrease in the number of spatial streams or the number of transmit antennas, the first communication apparatus may scramble the PPDU based on Q time-variant function values (for example, $Q<N_1$), and the second communication apparatus may descramble the PPDU based on the Q time-variant function values. In other words, when the first communication apparatus does not use a spatial stream (or some spatial streams) or a transmit antenna (or some transmit antennas), a time-variant function value corresponding to the spatial stream or the transmit antenna may be default, and a time-variant function corresponding to a time-variant function value used on another spatial stream or transmit antenna remains unchanged. For a sensing measurement session, after the $N_1$ time-variant functions are determined, a correspondence between the time-variant function and the transmit antenna or a correspondence between the time-variant function and the spatial stream is determined. Even if the first communication apparatus does not use a transmit antenna or a spatial stream, a time-variant function corresponding to another transmit antenna or spatial stream remains unchanged, that is, a correspondence between the transmit antenna or spatial stream and the time-variant function does not vary with a decrease in the transmit antennas or spatial streams.

For example, when the number of spatial streams is less than the number of transmit antennas, the first communication apparatus may use an antenna selection matrix (antenna selection matrix) to map the spatial streams to the antennas. In this case, $N_1$ may be less than or equal to the number of spatial streams. For example, $N_2=2$ and $N_3=3$, that is, the number of spatial streams is less than the number of transmit antennas. When the antenna selection matrix (Antenna Selection Matrix) is used to map the spatial streams to the transmit antennas, $N_1$ is less than or equal to 2.

For another example, when there is only one spatial stream, $N_1$ may be less than or equal to the number of transmit antennas. For example, $N_2=1$ and $N_3=3$. The first communication apparatus may send the PPDU on three transmit antennas (or two transmit antennas, or the like), where $N_1$ is less than or equal to 3.

Usually, the first communication apparatus may send a sensing PPDU on a plurality of spatial streams, send a sensing NDPA frame or trigger frame (for example, a sensing polling trigger frame, a sensing SR2SI sounding trigger frame, or a sensing reporting trigger frame) on a single spatial stream, and send a sensing NDPA frame or trigger frame on a plurality of transmit antennas. For example, the first communication apparatus may not scramble the sensing NDPA frame or trigger frame. For another example, the first communication apparatus may determine a number of time-variant function values based on a number of transmit antennas corresponding to the sensing NDPA frame or trigger frame, but the number of time-variant function values is less than or equal to $N_1$. Therefore, in a sensing measurement exchange, a number of time-variant function values used to scramble some PPDUs (for example, sensing PPDUs) may be $N_1$ or less than $N_1$, and a number of time-variant function values used to scramble some other PPDUs may be less than $N_1$.

Embodiments of this application further provide a time-variant function matrix. The time-variant function matrix may be a matrix for discretely sampling a time-variant function based on a sampling interval. For example, the sampling interval is $\Delta T$. A row of the time-variant function matrix may correspond to a different time-variant function, and a column of the time-variant function matrix may correspond to different time; or a column of the time-variant function matrix corresponds to a different time-variant function, and a row of the time-variant function matrix corresponds to different time. A specific form of the time-variant function matrix is not limited in embodiments of this application. For ease of description, the following describes the time-variant function matrix by using an example in which a row of the time-variant function matrix corresponds to a different time-variant function, and a column of the time-variant function matrix corresponds to different time.

For example, the time-variant function matrix includes $N_1$ rows and M columns, each of the $N_1$ rows may correspond to one time-variant function (or referred to as a time-variant function obtained through discrete sampling), and the $N_1$ rows correspond to $N_1$ time-variant functions. The $N_1$ time-variant function values may be values of $N_1$ elements in a specific column of the time-variant function matrix. For example, a number of rows of the time-variant function matrix may be greater than $N_1$, and a number of columns may be greater than M.

The time-variant function matrix in embodiments of this application may also be referred to as a time-variant function table, a time-variant function set, or the like. For example, the time-variant function matrix may be replaced with a time-variant function table, a row of the time-variant function table corresponds to a different time-variant function, and a column of the time-variant function table corresponds to different time. A specific form of the $N_1$ time-variant functions is not limited in embodiments of this application.

For example, three time-variant functions are used as an example. The following shows an example of a part of the time-variant function matrix, where for brevity, the entire time-variant function matrix is not shown:

- 0.4987-0.8668i -0.5107+0.8598i 0.9991+0.0419i -0.4117-0.9113i -0.6575+0.7534i 0.9444+0.3289i
- 0.4384+0.8988i -0.7193-0.6947i 0.809-0.5878i 0.5592+0.829i -0.766+0.6428i - 0.809-0.5878i
- 0.0138-0.9999i -0.9231-0.3846i -0.8811+0.4729i -0.4015+0.9158i 0.0598+0.9982i 0.3537+0.9354i

FIG. 5a is a diagram of a time-variant function according to an embodiment of this application. The time-variant function shown in FIG. 5a is a second time-variant function in the time-variant function matrix. For example, the time-variant function can cover a frequency range of -0.5 Hz to 0.5 Hz generated by a target. For another example, the time-variant function can cover a frequency range of 0 Hz to 0.5 Hz generated by the target.

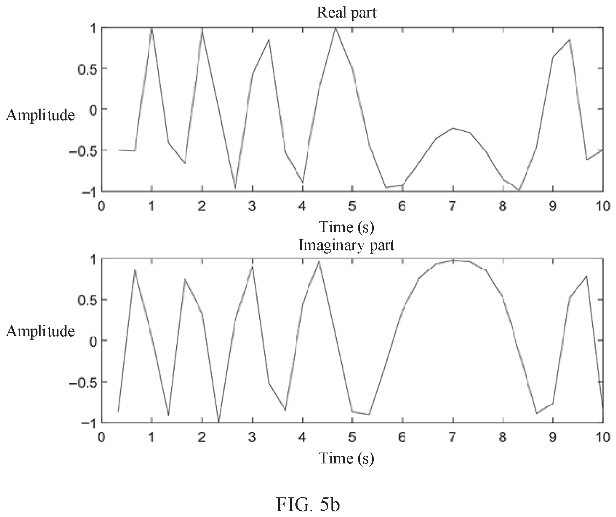

FIG. 5b is a diagram of a real part and an imaginary part of a time-variant function according to an embodiment of this application. FIG. 5b shows that the real part and the imaginary part of the time-variant function shown in FIG. 5a vary with time. The diagrams of the time-variant function matrix and the time-variant function shown above are merely examples, and should not be construed as a limitation on embodiments of this application.

The $N_1$ time-variant functions shown in this embodiment of this application may meet the following characteristic 1:

Characteristic 1: A difference between any two of the $N_1$ time-variant functions meets a characteristic of varying with time, or a quotient of any two of the $N_1$ time-variant functions meets a characteristic of varying with time.

For example, the time-variant function $x(t) = e^{jwt}$, and the time-variant function is a constant modulus. For example, in the $N_1$ time-variant functions, a first time-variant function $x_1(t) = e^{jw_1t}$, and a second time-variant function $x_2(t) =$

$e^{jw_2t}$. The rest may be deduced by analogy. Examples are not enumerated herein. Each of the $N_1$ time-variant functions meets the characteristic of varying with time, and a quotient of any two of the $N_1$ time-variant functions also meets the characteristic of varying with time.

For another example, the time-variant function x(t) = $Ae^{jwt}$, and the time-variant function is a non-constant modulus. For example, in the $N_1$ time-variant functions, a first time-variant function $x_1(t) = A_1e^{jw_1t}$, and a second time-variant function $x_2(t) = A_2e^{jw_2t}$. The rest may be deduced by analogy. Examples are not enumerated herein. Each of the $N_1$ time-variant functions meets the characteristic of varying with time, and a quotient of any two of the $N_1$ time-variant functions also meets the characteristic of varying with time.

For still another example, the time-variant function x(t) = $wt$, that is, the time-variant function describes a phase. Each of the $N_1$ time-variant functions meets the characteristic of varying with time, and a difference of any two of the $N_1$ time-variant functions also meets the characteristic of varying with time.

For example, a phase value range of the time-variant function may be $[0,2\pi]$, or a phase value range of the time-variant function may be a subrange in $[0,2\pi]$. The foregoing value range of the time-variant function may be used to control a phase difference of signals on a plurality of antennas/spatial streams/channels. The representation manner of the time-variant function shown above is merely an example. For example, the time-variant function may alternatively be represented by a real part and an imaginary part. This is not limited in embodiments of this application.

The $N_1$ time-variant functions shown in this embodiment of this application can effectively implement privacy-preserving sensing by meeting the foregoing characteristic 1. If the first communication apparatus uses a same time-variant function value to scramble a PPDU transmitted on two spatial streams, an illegitimate device may offset the time-variant function value used for scrambling when receiving the PPDU and performing channel estimation based on the PPDU, to learn real channel information, and extract privacy information (for example, breathing) of a target from the real channel information. Therefore, in embodiments of this application, different time-variant function values are used for scrambling on different spatial streams, to effectively preserve privacy of a user and improve information transmission security.

Further, the $N_1$ time-variant functions may further meet the following characteristic 2:
Characteristic 2: A frequency range corresponding to the time-variant function is greater than or equal to a Doppler frequency range generated by a target.

For example, a frequency range corresponding to the time-variant function in a sensing time window is greater than or equal to the Doppler frequency range of the target. The sensing time window is a time window of a sensing procedure corresponding to one or more sensing applications. For example, a frequency range corresponding to each of the $N_1$ time-variant functions in the sensing time window may be greater than or equal to the Doppler frequency range of the target. The Doppler frequency range may include a Doppler frequency range, for example, near 0 Hz, generated when the target is stationary. For another example, the Doppler frequency range may include a Doppler frequency range generated by movement of the target. For ease of description, in the following descriptions of specific examples, the Doppler frequency range generated by the movement of the target is used as an example.

The foregoing characteristic 2 may alternatively be replaced with that the frequency range corresponding to the time-variant function is determined based on the Doppler frequency range of the target. For example, the frequency range corresponding to the time-variant function may be determined according to the following method: When initiating a sensing procedure based on a sensing application, the sensing initiator estimates, based on a sensing time window of the sensing procedure and a prior Doppler frequency range of the target, the frequency range corresponding to the time-variant function. The $N_1$ time-variant functions are determined based on the estimated frequency range. A frequency domain range obtained by performing discrete Fourier transform (discrete Fourier transform, DFT) (or fast Fourier transform (fast Fourier transform, FFT)) on the determined $N_1$ time-variant functions meets the characteristic 2.

In a possible implementation of the foregoing characteristic 2, frequency ranges corresponding to the time-variant functions may be different based on different Doppler frequency ranges generated by movement of the target, or PPDUs transmitted in different frequency ranges may be scrambled according to different time-variant functions. The sensing procedure shown in FIG. 2 is applicable to different sensing applications. Therefore, the foregoing characteristic 2 may alternatively be replaced with that the frequency ranges corresponding to the time-variant functions may be different when the sensing procedure is applied to different sensing applications. For example, in a breathing detection application, the Doppler frequency generated by movement of the target is low (for example, 0.3 Hz or 0.4 Hz). Therefore, a frequency range corresponding to a time-variant function corresponding to the breathing detection application may be small. For example, the frequency range of the time-variant function may be from 0 Hz to 5 Hz. For another example, in a fall detection application, a Doppler frequency generated by movement of the target is high. For example, a Doppler frequency of more than 300 Hz may be generated at a frequency of 5 GHz. Therefore, a frequency range corresponding to a time-variant function corresponding to the fall detection application may be large, for example, the frequency range of the time-variant function is from 10 Hz to 500 Hz. For another example, the Doppler frequency range generated by movement of the target is from 2 Hz to 5 Hz. In this case, the frequency range of the time-variant function may be from 0 Hz to 5 Hz, or from 0 Hz to 10 Hz, or from 2 Hz to 5 Hz, or from 2 Hz to 6 Hz, or the like. Examples are not enumerated herein.

In another possible implementation of the characteristic 2, comprehensive disturbance can be implemented on frequency ranges corresponding to time-variant functions, to be applied to a plurality of sensing applications. In other words, the frequency range corresponding to the time-variant function may correspond to Doppler frequency ranges of the target in at least two sensing applications. For example, the frequency range corresponding to the time-variant function can cover the Doppler frequency range corresponding to the breathing detection application and the Doppler frequency range corresponding to the fall detection application, for example, the frequency range of the time-variant function is from 0 Hz to 500 Hz. Certainly, the frequency range corresponding to the time-variant function may further cover Doppler frequency ranges corresponding to more sensing applications. Examples are not enumerated herein. A time-variant function with a large frequency range (or large bandwidth) can be designed to implement comprehensive disturbance on a specific spectrum range, to implement scrambling of a plurality of sensing applications.

The frequency range corresponding to the time-variant function is greater than or equal to the Doppler frequency range generated by movement of the target, to effectively scramble the PPDU (for example, a PPDU in a sensing measurement exchange) in the sensing procedure, scramble a PPDU in a specific frequency range, and mask real movement information of the target. This implements secure sensing (secure sensing).

The frequency shown above may alternatively be represented by bandwidth. For example, the characteristic 2 may alternatively be replaced with that bandwidth corresponding to the time-variant function is greater than or equal to bandwidth corresponding to the target. In other words, the time-variant function needs to have specific bandwidth, to scramble a PPDU in a specific spectrum range, and mask the real movement information of the target. The bandwidth corresponding to the time-variant function shown in this embodiment of this application is different from bandwidth of the PPDU. A 20 MHz PPDU is used as an example. When the 20 MHz PPDU is used for breathing detection. If the Doppler frequency range generated by the target is from 0.2 Hz to 0.5 Hz, the frequency range of the time-variant function does not need to be 20 MHz, provided that the frequency range of the time-variant function can cover the Doppler frequency range generated by breathing.

The characteristic met by the $N_1$ time-variant functions is also applicable to $N_1+x$ time-variant functions. A characteristic met by the $N_1+x$ time-variant functions is not described in detail herein.

The following describes in detail exchanging manners in embodiments of this application. Two communication parties can determine a time-variant function value in the following implementations. The following uses the sensing initiator and the sensing responder as an example to describe the exchanging manners. For example, the sensing initiator may send the following secure parameter, index information, configuration information, time-variant function matrix, and the like to the sensing responder. Certainly, as the standard progresses, or during specific implementation, the sensing responder may send the following information and the like. This is not limited in embodiments of this application. For ease of description, the following describes the exchanging manners by using an example in which the sensing initiator sends the following information.

Implementation 1

The sensing initiator sends a secure parameter to the sensing responder, where the secure parameter is used to generate the $N_1$ time-variant functions, or the secure parameter is used to generate the $N_1+x$ time-variant functions. When the secure parameter is used to generate the $N_1$ time-variant functions, the sensing initiator may send configuration information to the sensing responder, and the sensing responder receives the secure parameter and the configuration information. When the secure parameter is used to generate the $N_1+x$ time-variant functions, the sensing initiator may send the configuration information and index information to the sensing responder, and the sensing responder receives the secure parameter, the configuration information, and the index information. Whether the secure parameter, the configuration information, and the index information are simultaneously sent, or whether the secure parameter, the configuration information, and the index information are located in a same field or element when being simultaneously sent is not limited in embodiments of this application. The $N_1+x$ time-variant functions include the $N_1$ time-variant functions.

For example, the sensing initiator may discretely sample the $N_1$ time-variant functions or the $N_1+x$ time-variant functions, to obtain a time-variant function matrix (for example, a matrix (2) shown below). Correspondingly, after generating the $N_1$ time-variant functions or the $N_1+x$ time-variant functions based on the secure parameter, the sensing responder may discretely sample the time-variant functions based on the sampling interval $\Delta T$, to obtain the time-variant function matrix. The sampling interval $\Delta T$ may be a parameter known to the two communication parties, or may be carried in the configuration information shown below.

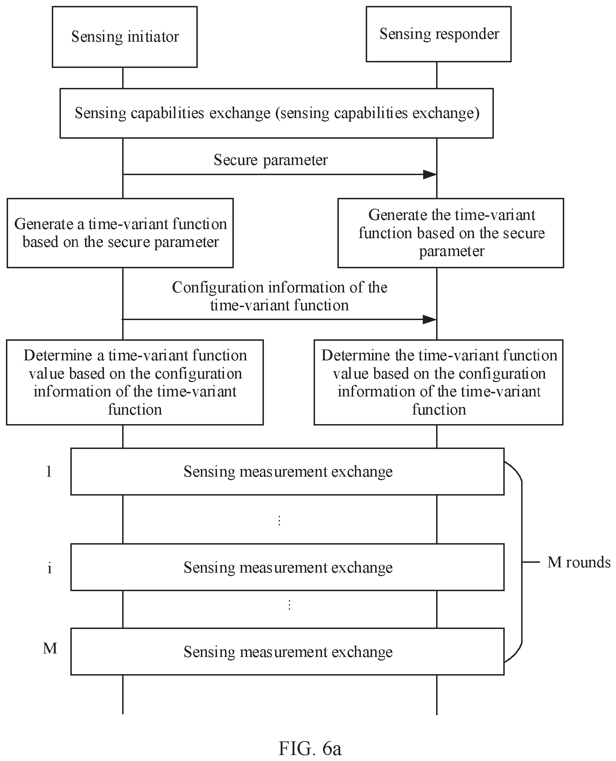

FIG. 6a is a diagram of a time-variant function value exchange according to an embodiment of this application. The exchanging diagram shown in FIG. 6a may be understood as that the sensing initiator sends the secure parameter and then sends the configuration information.

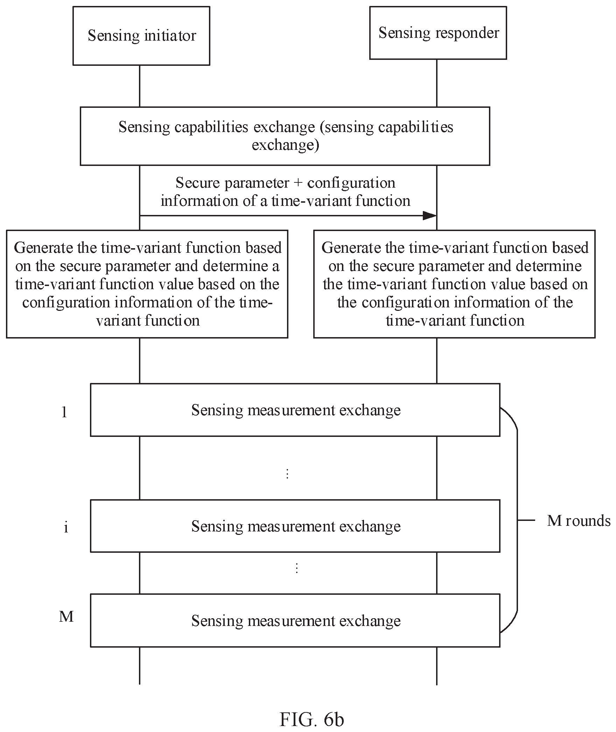

FIG. 6b is another diagram of a time-variant function value exchange according to an embodiment of this application. The exchanging diagram shown in FIG. 6b may be understood as that the sensing initiator simultaneously sends the secure parameter and the configuration information. For sensing capabilities exchange phases shown in FIG.

6a and FIG. 6b, refer to FIG. 2, FIG. 3, or the like. Details are not described herein again.

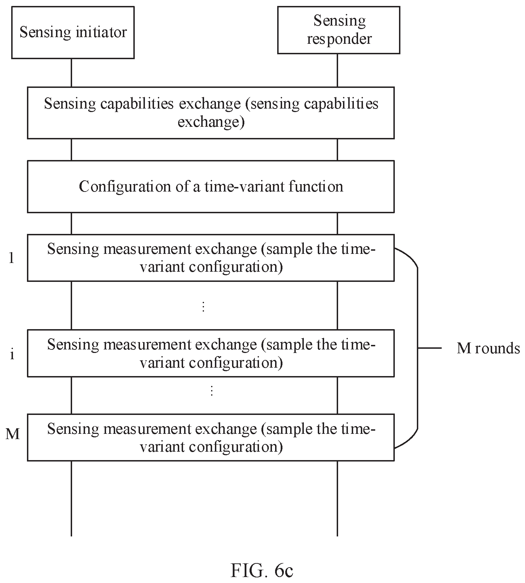

FIG. 6c is still another diagram of a time-variant function value exchange according to an embodiment of this application. FIG. 6a and FIG. 6b may be understood as that the two communication parties exchange related information in a sensing measurement session phase. FIG. 6c may be understood as that the two communication parties exchange partial information in a sensing measurement session phase, and then exchange remaining information in a sensing measurement exchange phase. For further descriptions of FIG. 6a to FIG. 6c, refer to the following descriptions of the secure parameter, the index information, and the configuration information. As shown in FIG. 6c, a sampling point n or time t is configured in a sensing measurement exchange. When the sampling point n or the time t is exchanged in the sensing measurement exchange, the sensing initiator may flexibly set the time t or the sampling point n based on time at which the sensing measurement exchange actually occurs, to avoid frequency compression of the time-variant function, and more easily ensure a frequency coverage characteristic of the time-variant function.

The following describes in detail the secure parameter shown in embodiments of this application.

The secure parameter may be used to generate the time-variant function. Although the method for generating the time-variant function is disclosed, the secure parameter is confidential in embodiments of this application. Therefore, even if the illegitimate device receives the PPDU sent by the first communication apparatus, the illegitimate device cannot deduce the time-variant function value, and cannot obtain the information related to the target and the real channel information by parsing the PPDU. Because the illegitimate device obtains scrambled channel information, real information of the target cannot be extracted from the channel information. This effectively prevents the illegitimate device from obtaining the information related to the target, and improves information security.

The secure parameter varies with the generation manner of the time-variant function. For example, the secure parameter may be M. For example, the time-variant function may be generated by performing interpolation on M random numbers. For another example, the time-variant function may be generated by performing interpolation on M random numbers generated based on a random key, a seed, or an encryption algorithm. For example, the secure parameter M may be used to generate one time-variant function. For example, the sensing initiator sends $N_1$ secure parameters, to generate $N_1$ time-variant functions. For another example, the sensing initiator sends $N_1+x$ secure parameters, to generate $N_1+x$ time-variant functions. For another example, the secure parameter M may alternatively be used to generate $N_1$ time-variant functions or $N_1+x$ time-variant functions. For example, one time-variant function is generated by performing interpolation on the M random numbers, and then interpolation is performed after an order of the time-variant function is randomly adjusted, to obtain a second time-variant function. The rest may be deduced by analogy. In this way, the $N_1$ time-variant functions or the $N_1+x$ time-variant functions are generated. For example, the secure parameter may be a vector. For example, the sensing initiator may securely transfer a group of vectors. After an encryption process, for example, an advanced encryption standard (advanced encryption standard, AES) or hash (HASH), known to the two communication parties, random numbers are generated based on the vectors. A manner of generating the $N_1$ time-variant functions or the $N_1+x$ time-variant functions is not limited in embodiments of this application.

For example, the secure parameter may be used to generate the $N_1$ time-variant functions. For example, the two communication parties may discretely sample the $N_1$ time-variant functions based on the sampling interval $\Delta T$, to obtain a time-variant function matrix. Based on a relationship between the $N_1$ time-variant functions and the time-variant function matrix, the secure parameter may also be used to generate the time-variant function matrix. The time-variant function matrix is applicable to a PPDU in a sensing measurement exchange corresponding to a current sensing measurement session. In other words, time-variant function values used to scramble the PPDU in the sensing measurement exchange corresponding to the current sensing measurement session may be determined based on the time-variant function matrix. After the sensing measurement session ends, the two communication parties may update the $N_1$ time-variant functions. In this way, the time-variant functions are updated in real time, to further improve information security of the target.

For another example, the secure parameter may be used to generate the $N_1+x$ time-variant functions. The sensing initiator may select $N_1$ time-variant functions from the $N_1+x$ time-variant functions based on different device capabilities and scenario requirements. The sensing initiator may further indicate the selected $N_1$ time-variant functions based on the index information, where the index information may indicate the $N_1$ time-variant functions in the $N_1+x$ time-variant functions. For example, the two communication parties may discretely sample the $N_1+x$ time-variant functions based on the sampling interval $\Delta T$, to obtain a time-variant function matrix, where x is a positive integer. The time-variant function matrix including the $N_1+x$ time-variant functions can be applied to one or more sensing measurement sessions. Based on a relationship between the $N_1+x$ time-variant functions and the time-variant function matrix, the secure parameter may also be used to generate the time-variant function matrix.

In embodiments of this application, after the two communication parties exchange the secure parameter, the time-variant function matrix determined based on the secure parameter is applicable to a PPDU in a sensing measurement exchange corresponding to one or more subsequent sensing measurement sessions.

In embodiments of this application, the secure parameter may be carried in the following frames:

Manner 1A: The secure parameter is carried in a sensing measurement request frame. As shown in FIG. 6a to FIG. 6c, the sensing measurement request frame sent by the sensing initiator to the sensing responder may carry the secure parameter. A time-variant function configuration shown in FIG. 6c includes the secure parameter.

FIG. 7a is a diagram of a format of a sensing measurement request frame according to an embodiment of this application. As shown in FIG. 7a, the sensing measurement request frame may include at least one of the following: a category (category), a public action/protected dual of public action (public action/protected dual of public action), a dialog token (dialog token), sensing comeback information (sensing comeback info), a measurement session ID indication (measurement session ID indication), a sensing measurement parameters element (sensing measurement parameters element), and a secure sensing element (secure sensing element). Lengths of the fields shown in FIG. 7a are merely examples. The lengths of the fields may change as the standard progresses. Therefore, the lengths of the fields shown in FIG. 7a should not be understood as a limitation on embodiments of this application.

For example, the secure parameter may be present in the sensing measurement request frame as a separate element. As shown in FIG. 7a, a name of the separate element may be a secure sensing element (secure sensing element) or a privacy-preserving element (privacy-preserving element). The name of the separate element is not limited in embodiments of this application. The secure sensing element includes a secure parameter field, and the secure parameter field may be used to carry the secure parameter. For another example, the secure parameter may be carried in the sensing measurement parameters element (sensing measurement parameters element) in the sensing measurement request frame (the secure parameter in the sensing measurement parameters element is not shown in FIG. 7a). For example, the secure parameter is carried in a sensing measurement parameters (sensing measurement parameters) field in the sensing measurement parameters element. For another example, information about the secure parameter may be carried in the sensing measurement parameters element as a subelement (subelement), and a name of the subelement may be a secure sensing subelement (secure sensing subelement) or the like. For example, the secure sensing subelement may be carried in a sensing subelement.

Manner 1B: The secure parameter is carried in a sensing capabilities element. The sensing capabilities element shown in FIG. 3 may be further extended by an integer multiple of 8 bits (bits) (extended bits are not shown in FIG. 3). The extended bits may be used to carry the secure parameter.

Manner 1C: The secure parameter is carried in an independent frame. The independent frame shown herein is relative to a frame in the sensing procedure. A specific name of the independent frame is not limited in embodiments of this application. In an example, before the sensing measurement session is set up, for example, before the sensing measurement session phase, the sensing initiator sends the independent frame. In another example, after the sensing measurement session is set up, for example, after the sensing measurement session phase and before the sensing measurement exchange, the sensing initiator sends the independent frame. Correspondingly, the sensing responder receives the independent frame, obtains the secure parameter from the independent frame, and generates the time-variant function based on the secure parameter. For example, the independent frame may include a secure parameter element. For specific descriptions of the secure parameter element, refer to the manner 1A or FIG. 7a to FIG. 7c.

In embodiments of this application, the sensing initiator and the sensing responder may store the time-variant function matrix by exchanging the secure parameter. By storing the time-variant function matrix, the two communication parties may determine the time-variant function value based on the configuration information or based on the configuration information and the index information. In other words, the two communication parties may learn of the time-variant function value by querying the time-variant function matrix, to effectively reduce overheads of obtaining the time-variant function value by the two communication parties through calculation, and reduce a calculation amount of the two communication parties.

The following describes in detail the index information of the time-variant function shown in embodiments of this application.

The index information may indicate the $N_1$ time-variant functions in the $N_1+x$ time-variant functions. Alternatively, the index information may indicate the $N_1$ time-variant functions in the time-variant function matrix.

For example, the index information may include a start index and an end index. For example, the index information may include a start index and an end index of the $N_1$ time-variant functions in the time-variant function matrix. For example, the start index and the end index may be row indexes in the time-variant function matrix, and the $N_1$ time-variant functions are time-variant functions corresponding to rows between the start index and the end index in the time-variant function matrix. The $N_1$ time-variant functions may include a time-variant function corresponding to the start index in the time-variant function matrix and a time-variant function corresponding to the end index in the time-variant function matrix.

For another example, the index information may include a start index and a number of continuous indexes of the $N_1$ time-variant functions in the time-variant function matrix. The number of continuous indexes may also be referred to as a continuous index number or the like, and a specific name of the number of continuous indexes is not limited in embodiments of this application. For example, the $N_1$ time-variant functions include a time-variant function corresponding to the start index, $N_1=2$, the start index is 2, the number of continuous indexes is 2, and the $N_1$ time-variant functions are two time-variant functions corresponding to a second row and a third row in the time-variant function matrix. For another example, $N_1=3$, the start index is 5, the number of continuous indexes is 3, and the $N_1$ time-variant functions are three time-variant functions corresponding to a fifth row, a sixth row, and a seventh row in the time-variant function matrix.

The foregoing two examples are applicable to the time-variant function matrix obtained through discrete sampling. The following examples are applicable to both a time-variant function that continuously varies with time (for example, a matrix (1) shown below) and a time-variant function matrix obtained through discrete sampling (for example, a matrix (2) shown below).

For another example, the index information may include an index of each of the $N_1$ time-variant functions, or the index information may include an index of each of the $N_1$ time-variant functions in the time-variant function matrix. For example, the index information may include row indexes corresponding to the $N_1$ time-variant functions in the time-variant function matrix. If the $N_1$ time-variant functions respectively correspond to a second row to a fourth row of the time-variant function matrix, the index information may include a row index of the second row, a row index of the third row, and a row index of the fourth row. If the $N_1$ time-variant functions respectively correspond to a second row and a fourth row of the time-variant function matrix, the index information may include a row index of the second row and a row index of the fourth row.

The $N_1$ time-variant functions shown in this embodiment of this application may correspond to continuous rows of the time-variant function matrix, or the $N_1$ time-variant functions may correspond to non-continuous rows of the time-variant function matrix. The index information shown above is described by using an example in which a row of the time-variant function matrix corresponds to a time-variant function. During specific implementation, a column of the time-variant function matrix may correspond to a time-variant function. Details are not described herein.

In embodiments of this application, the index information may be carried in the following frames:

Manner 2A: The index information is carried in a sensing measurement request frame. As shown in FIG. 6a to FIG. 6c, the sensing measurement request frame sent by the sensing initiator to the sensing responder may carry the secure parameter and the index information. The time-variant function configuration shown in FIG. 6c may include the secure parameter and the index information.

For example, the index information may be present in the sensing measurement request frame as a separate element. For example, the index information may be present in a secure sensing element (for example, the secure sensing element shown in FIG. 7a to FIG. 7c) included in the sensing measurement request frame. For example, the secure sensing element includes a secure mask start (secure mask start) field and a secure mask end (secure mask end) field. The secure mask start field may be used to carry the start index of the $N_1$ time-variant functions in the time-variant function matrix, and the secure mask end field may be used to carry the end index of the $N_1$ time-variant functions in the time-variant function matrix. An example in which the $N_1$ time-variant functions correspond to continuous rows of the time-variant function matrix is used herein. For another example, the secure sensing element includes a secure mask start field and a secure mask continuous field, and the secure mask continuous field may be used to carry continuous indexes. For another example, the secure sensing element may include at least one secure mask field, each secure mask field may be used to carry one index, and each index may correspond to one time-variant function in the time-variant function matrix.

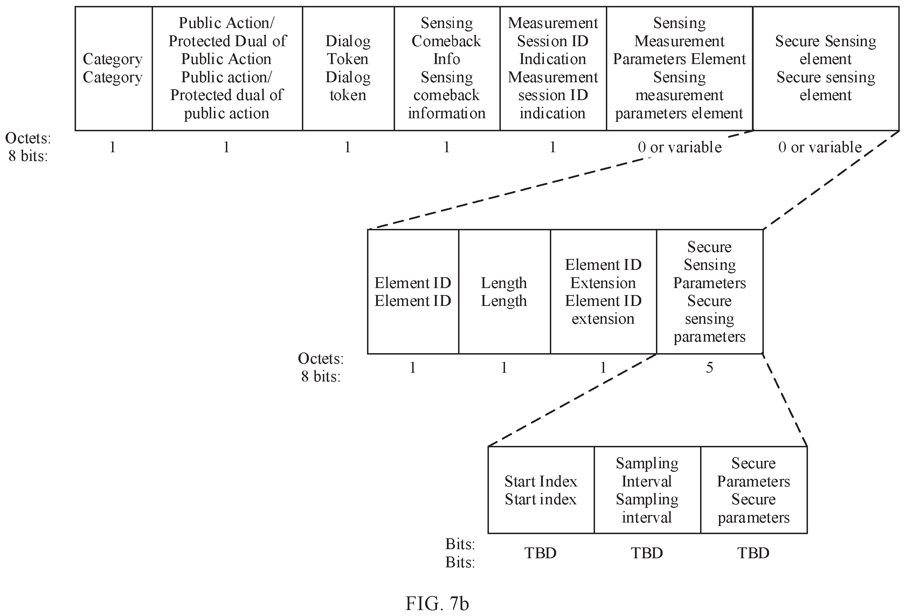

FIG. 7b is a diagram of a format of another sensing measurement request frame according to an embodiment of this application. As shown in FIG. 7b, the sensing measurement request frame includes a secure sensing element, and the secure sensing element includes an element ID (element ID) field, a length (length) field, an element ID extension (element ID extension) field, and a secure sensing parameters (secure sensing parameters) field. The secure sensing parameters field includes a secure mask start field, a secure mask end field, and a secure parameters field. FIG. 7b shows an example in which the secure sensing element includes the secure mask start field and the secure mask end field. For example, the two fields may be replaced with a secure mask start field and a secure mask continuous field, or one or more secure mask fields. Examples are not enumerated herein. For other descriptions of FIG. 7b, refer to FIG. 7a. Details are not described herein again.

For another example, the index information may be present in a sensing measurement parameters element of the sensing measurement request frame. For example, the index information is carried in a sensing measurement parameters field in the sensing measurement parameters element. For another example, the index information may be present in the sensing measurement parameters element as a subelement, and a name of the subelement may be a secure sensing subelement or the like.

Manner 2B: The index information may be carried in an independent frame. For related descriptions of the independent frame, refer to the foregoing manner 1C. Details are not described herein again. The independent frame shown in the manner 2B and the independent frame shown in the foregoing manner 1C may be a same frame or different frames. This is not limited in this embodiment of this application.

In this embodiment of this application, the two communication parties may effectively learn of the $N_1$ time-variant functions from the $N_1+x$ time-variant functions or the time-variant function matrix by exchanging the index information. In other words, the two communication parties can learn, by exchanging the index information, of the $N_1$ time-variant functions used in the current sensing measurement session.

Any one of the manner 1A to the manner 1C may be combined with any one of the manner 2A and the manner 2B. Details are not described herein.

The following describes in detail the configuration information shown in embodiments of this application.

The configuration information may also be referred to as sampling information of the time-variant functions. The time-variant function values may be determined based on the time-variant functions and the configuration information.

In a possible implementation, the time-variant functions may be time-variant functions that are continuous in time. For example, the time-variant function may be represented as x(t). The configuration information may include at least one of the following: time t, sampling start time $t_0$, and a selecting interval T.

For example, the time-variant function matrix may be shown in a matrix (1):

$$\begin{bmatrix} x_1(t) \\ x_2(t) \\ . \\ . \\ . \\ x_z(t) \end{bmatrix} \quad (1)$$

Each row of the matrix (1) may correspond to one time-variant function, that is, each row may correspond to one x(t). For example, a first row of the time-variant function matrix corresponds to $x_1(t)$, and a second row of the time-variant function matrix corresponds to $x_2(t)$. Examples are not enumerated herein. Each column corresponds to one piece of time. The time-variant function matrix does not show different time. z in the matrix (1) may be greater than or equal to $N_1$. For example, $z=N_1$ or $z=N_1+x$.

The configuration information shown in embodiments of this application may be in the following manners:

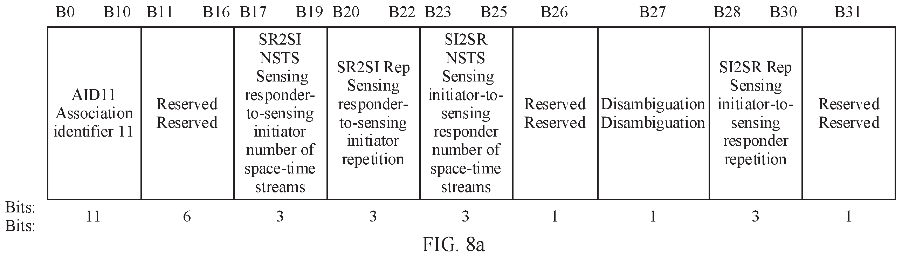

Manner 3A: As shown in FIG. 6c, the time t corresponding to the sensing measurement exchange may be carried in a frame of the sensing measurement exchange. For example, the sensing initiator may send the time t in at least one of the following frames: a sensing polling trigger frame, an SR2SI sounding trigger frame, an SR2SR sounding trigger frame, and a sensing NDPA frame. The sensing responder determines the time-variant function based on the secure parameter, and determines the time-variant function value based on the time t. Alternatively, the sensing responder determines the time-variant function based on the secure parameter and the index information, and determines the time-variant function value based on the time t. For related descriptions of the time t, refer to FIG. 8a to FIG. 8c below.

Manner 3B: As shown in FIG. 6a or FIG. 6b, M pieces of time t corresponding to the current sensing measurement session are carried in a sensing measurement request frame or an independent frame. In other words, in the sensing measurement session phase, the sensing initiator may send the M pieces of time t to the sensing responder, and each of the M pieces of time t corresponds to one sensing measurement exchange.

Manner 3C: As shown in FIG. 6a or FIG. 6b, the sampling start time $t_0$ and the selecting interval T that correspond to the current sensing measurement session are carried in a sensing measurement request frame or an independent frame. Based on the sampling start time and the selecting interval, the sensing responder may obtain values of the $N_1$ time-variant functions from the sampling start time based on the selecting interval T. For example, $t_0$=1 ms and T=5 ms. It indicates that the sensing responder may obtain values of the $N_1$ time-variant functions at 1 ms, to obtain $N_1$ time-variant function values for a first sensing measurement exchange; obtain values of the $N_1$ time-variant functions at 6 ms, to obtain $N_1$ time-variant function values for a second sensing measurement exchange; and the rest may be deduced by analogy. In other words, Q time-variant function values corresponding to the first sensing measurement exchange may be values of the time-variant functions at 1 ms, Q time-variant function values corresponding to the second sensing measurement exchange may be values of the time-variant functions at 6 ms, and the rest may be deduced by analogy.

The secure parameter, the configuration information, and the index information may be combined with each other. For example, the manner 3A may be combined with any one of the manner 1A to the manner 1C. For another example, the manner 3A may be combined with any one of the manner 1A to the manner 1C, and the manner 2A or the manner 2B. For example, the manner 3B or the manner 3C may be combined with the manner 1A or the manner 1C. For another example, the manner 3B and the manner 3C may be combined with the manner 1A or the manner 1C, and the manner 2A or the manner 2B.

In another possible implementation, the time-variant functions are time-variant functions that are discrete in time. For example, the time-variant function may be represented as $x(t_0 + n\Delta T)$. The configuration information may include at least one of the sampling start time $t_0$ (or a sampling start point $n_0$) and the sampling point n (or referred to as a time index).

For example, the time-variant function matrix may be shown in a matrix (2):

$$\begin{bmatrix} x_1(\Delta T) & x_1(2\Delta T) & \cdots & x_1(n\Delta T) \\ x_2(\Delta T) & x_2(2\Delta T) & \cdots & x_2(n\Delta T) \\ \cdot & \cdot & \cdot & \cdot \\ \cdot & \cdot & \cdot & \cdot \\ \cdot & \cdot & \cdot & \cdot \\ x_z(\Delta T) & x_z(2\Delta T) & \cdots & x_z(n\Delta T) \end{bmatrix} \quad (2)$$

$\Delta T$ is a sampling interval of the discrete time-variant functions, and n is a sampling point. $n$ in the matrix (2) may also be equivalent to a column index of the time-variant function matrix. The matrix (2) is a discrete time-variant function matrix, and the matrix (1) is a continuous time-variant function matrix. For other descriptions of the matrix (2), refer to the matrix (1). Details are not described herein again. The matrix (2) is equivalent to a case in which the time-variant functions are discretely sampled, that is, the sampling interval $\Delta T$ is known. During specific implementation, the sensing initiator may or may not indicate the sampling interval $\Delta T$ to the sensing responder. This is not limited in embodiments of this application.

The configuration information shown in embodiments of this application may be in the following manners:

Manner 4A: As shown in FIG. 6c, the sampling point n corresponding to the sensing measurement exchange may be carried in a frame of the sensing measurement exchange. In other words, the sampling point carried in the frame of the sensing measurement exchange may be understood as a column index of the discrete time-variant function matrix whose sampling interval $\Delta T$ is known. For related descriptions of the manner 4A, refer to the foregoing manner 3A or FIG. 8a to FIG. 8c. Details are not described herein again. In this case, because the sampling point n may be understood as the column index of the time-variant function matrix, the sensing initiator may not indicate the sampling start time $t_0$ (or the sampling start point $n_0$) to the sensing responder.

Manner 4B: The sampling point n is carried in a sensing measurement request frame or an independent frame.

Manner 4C: The sampling point n and the sampling start time $t_0$ are carried in a sensing measurement request frame or an independent frame.

For the manner 4B and the manner 4C, when the two communication parties learn of a time-variant function matrix, it is equivalent to that time-variant functions are discrete sampled (at the sampling interval $\Delta T$). In this case, the configuration information may include the sampling point n, and the sampling point n may indicate a number of intervals $\Delta T$ at which a value is obtained from the time-variant function, or indicate a time interval at which a value is obtained from the time-variant function. If the configuration information does not include the sampling start time $t_0$ (or the sampling start point $n_0$), the sampling start time $t_0$ (or the sampling start point $n_0$) may be specific time (or a start point) by default. Optionally, the configuration information may alternatively include the sampling start time $t_0$ or the sampling start point $n_0$. The sampling start point $n_0$ may indicate specific $\Delta T$ from which values are obtained, and the sampling start time $t_0$ may indicate specific sampling start time. For example, n=10 and $t_0$=1. It indicates that a time-variant function value used by a PPDU in a first sensing measurement exchange is a value in a first column of the time-variant function matrix, a time-variant function value used by a PPDU in a second sensing measurement exchange is a value in an eleventh column of the time-variant function matrix, a time-variant function value used by a PPDU in a third sensing measurement exchange is a value in a twenty-first column of the time-variant function matrix, and the rest may be deduced by analogy.

A column index (which is referred to as a column index of a time-variant function matrix corresponding to a sensing measurement exchange for short below) of a time-variant function matrix corresponding to $N_1$ time-variant function values used by a PPDU in one sensing measurement exchange is related to an identifier of the sensing measurement exchange in M sensing measurement exchanges. Alternatively, the column index of the time-variant function matrix corresponding to the sensing measurement exchange may be determined based on a time difference between sensing measurement exchanges. The matrix (1) is used as an example. A column index of the time-variant function matrix corresponding to a first sensing measurement exchange in the M sensing measurement exchanges is $t_1$, and a column index of the time-variant function matrix corresponding to a second sensing measurement exchange is $t_2$. A time difference between $t_1$ and $t_2$ is equal to a time difference between the first sensing measurement exchange and the second sensing measurement exchange. The matrix (2) is used as an example. The column index, of the time-variant function matrix, corresponding to the sensing measurement exchange may be determined based on the sampling point n and the sampling interval $\Delta T$. For example, $\Delta T$=0.1s. A column index of the time-variant function matrix corresponding to a first sensing measurement exchange indicates a first column (for example, n=1), and a time difference between the first sensing measurement exchange and a second sensing measurement exchange is 1s. A column index of the time-variant function matrix corresponding to the second sensing measurement exchange indicates an eleventh column (for example, n=11). The identifier of the sensing measurement exchange shown in this embodiment of this application may also be replaced with a measurement exchange identifier (measurement exchange ID), or a sequential number/quantity or a number of sensing measurement exchanges.

When the index information, the configuration information, and the secure parameter are all carried in a same frame, whether the three pieces of information are carried in a same element or a same field is not limited in embodiments of this application. The index information, the configuration information, and the secure parameter may be carried in a same frame in a non-simultaneous manner. This is described in the following embodiments.

The following describes examples of combination manners of the foregoing information based on the secure parameter, the index information, and the configuration information shown above.

In a possible implementation, both the secure parameter and the configuration information may be carried in the sensing measurement request frame.

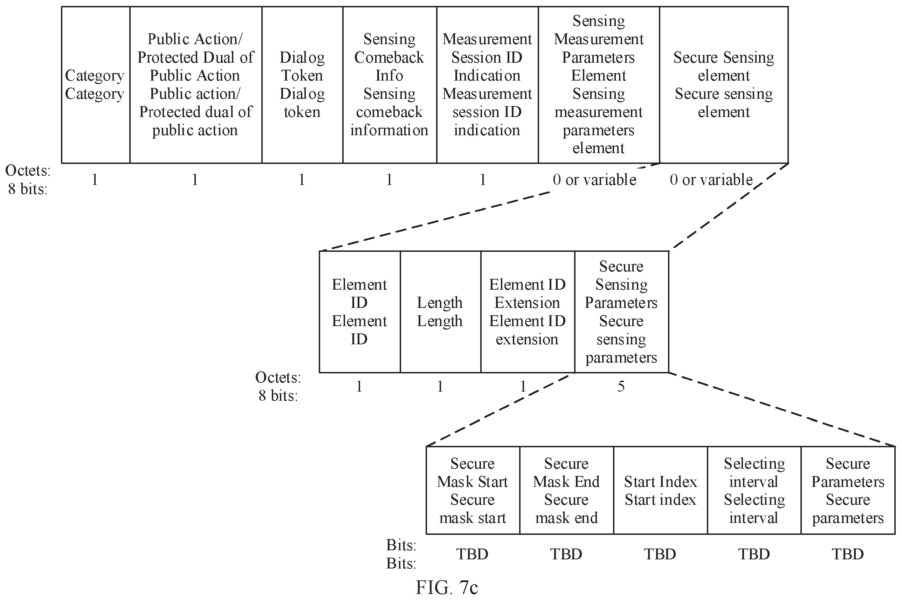

FIG. 7c is a diagram of a format of still another sensing measurement request frame according to an embodiment of this application. As shown in FIG. 7c, the sensing measurement request frame includes a secure sensing element, and the secure sensing element includes an element ID (element ID) field, a length (length) field, an element ID extension (element ID extension) field, and a secure sensing parameters (secure sensing parameters) field. The secure sensing parameters field includes a start index (start index) field, a selecting interval (selecting interval) field, and a secure parameters (secure parameters) field. For related descriptions of the secure parameters field, refer to the foregoing manner 1A. Details are not described herein again. For example, the start index field may indicate the sampling start time $t_0$, and the selecting interval field may indicate the selecting interval T. For another example, the start index field may indicate the sampling start point $n_0$, and the selecting interval field may indicate the sampling point n.

In this embodiment of this application, lengths of the start index field, the selecting interval field, and the secure parameters field in the secure sensing parameters field are not limited. FIG. 7c shows an example in which the lengths of the fields are to be determined (to be determined, TBD). For related descriptions of other fields in FIG. 7c, refer to FIG. 7a or FIG. 7b. Details are not described herein again.

In another possible implementation, the secure parameter may be carried in a sensing measurement request frame or an independent frame, and the configuration information may be indicated by a spatial stream allocation (spatial stream allocation, SS allocation) field of a trigger frame. The trigger frame may be an SR2SI sounding trigger frame or an SR2SR sounding trigger frame. The trigger frame includes the SS allocation field, and the SS allocation field may be related to a row index of the time-variant function matrix. In other words, a correspondence between a spatial stream and a time-variant function may be predefined, for example, the correspondence between a spatial stream and a time-variant function is defined in a standard or defined based on specific implementation. For example, the SS allocation field indicates that a first spatial stream and a second spatial stream (a total of two spatial streams) are used. In this case, a time-variant function corresponding to a first row or a second row of the time-variant function matrix is used by default. If the SS allocation field indicates that a third spatial stream is used, a time-variant function corresponding to a third row of the time-variant function matrix is used by default. The rest may be deduced by analogy. The column index of the time-variant function matrix may correspond to the measurement exchange identifier (for example, a measurement exchange ID). For example, a first sensing measurement exchange may correspond to a first column of the time-variant function matrix, and a second sensing measurement exchange corresponds to a second column of the time-variant function matrix. The row index of the time-variant function is combined with the SS allocation field for usage, to reduce resources for exchanging the configuration information, and further reduce communication resources.

In still another possible implementation, the sampling point n may correspond to an identifier of a sensing measurement exchange. The secure parameter, or the secure parameter and the index information may be carried in a sensing measurement request frame or an independent frame. For related descriptions of the secure parameter and the index information, refer to the manner 1A to the manner 1C, or the manner 2A and the manner 2B. Details are not described herein again. For the M rounds of sensing measurement exchanges shown in FIG. 6a and FIG. 6b, a sampling point n of the first sensing measurement exchange is equal to 1, a sampling point n of an $i^{th}$ sensing measurement exchange is equal to i, and the rest may be deduced by analogy. i is an integer greater than or equal to 1 and less than or equal to M.

In still another possible implementation, the sampling point n or the time t may be carried in a frame of a sensing measurement exchange (for example, the manner 3A and the manner 4A shown above). The secure parameter, or the secure parameter and the index information may be carried in a sensing measurement request frame or an independent frame. For related descriptions of the secure parameter and the index information, refer to the secure parameter shown above. Alternatively, the secure parameter and the index information may be carried in a sensing measurement request frame or an independent frame. Details about the secure parameter and the index information are not described herein again.

The sensing initiator may indicate the time t or the sampling point n of the time-variant function to the sensing responder based on a related frame of the sensing measurement exchange. The time t or the sampling point n may be carried in one or more frames in the sensing measurement exchange. For example, the time t or the sampling point n may be carried in a sensing polling trigger frame, an SR2SI sounding trigger frame, an SR2SR sounding trigger frame, and a sensing NDPA frame. For example, time or a sampling point carried in frames such as a sensing polling trigger frame, an SR2SI sounding trigger frame, an SR2SR sounding trigger frame, and a sensing NDPA frame in a current sensing measurement exchange may act on a frame of the current sensing measurement exchange, or may act on a frame of a next sensing measurement exchange. A case in which the time t or the sampling point n carried in the frame of the current sensing measurement exchange may act on the frame of the current sensing measurement exchange is used as an example. For example, the time-variant function value determined based on the sampling point n or the time t may be used to scramble at least one of an SI2SR NDP or an SR2SI NDP following the sensing NDPA frame of the current sensing measurement exchange. Alternatively, the time-variant function value determined based on the sampling point n or the time t may be used to scramble an SR2SI NDP following the sensing SR2SI sounding trigger frame of the current sensing measurement exchange. Certainly, the sampling point n or the time t carried in the frame of the current sensing measurement exchange may alternatively act on another frame of the current sensing measurement exchange, for example, at least one of the sensing NDPA frame, the trigger frame, or a report frame. Details are not described herein.

The following uses examples to describe a case in which the sampling point n or the time t is carried in the sensing NDPA frame or the trigger frame.

FIG. 8a is a diagram of a format of a sensing NDPA frame according to an embodiment of this application. FIG. 8a shows a format of a station information (STA Info) field of the sensing NDPA frame when an AID (for example, an AID11) is less than 2008. The time t or the sampling point n shown in this embodiment of this application may be carried in at least one of B11 to B16, B26, or B31. In other words, some or all of reserved bits shown in FIG. 8a may indicate the time or the sampling point. FIG. 8a shows an example of the STA info field. Descriptions of other fields of the sensing NDPA frame are not described in detail in embodiments of this application.

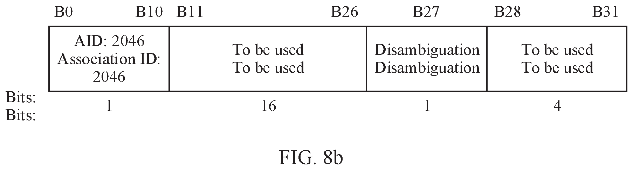

FIG. 8b is a diagram of a format of another sensing NDPA frame according to an embodiment of this application. FIG. 8b shows a format of a STA info field of the sensing NDPA frame when an AID is a special AID. The AID field in FIG. 8b carries an AID2046 or another AID greater than or equal to 2008. The time t or the sampling point n shown in this embodiment of this application may be carried in at least one of B11 to B26 and B28 to B31.

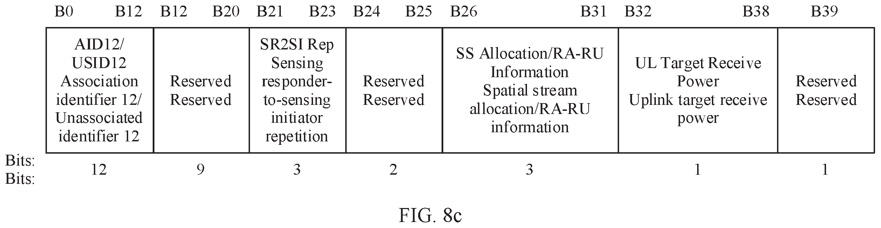

FIG. 8c is a diagram of a format of an SR2SI sounding trigger frame according to an embodiment of this application. FIG. 8c shows a format of a user information (User Info) field of the SR2SIR sounding trigger frame when an AID (for example, an AID12) is not equal to 2008. The time or the sampling point shown in this embodiment of this application may be carried in at least one of B12 to B20, B24, B25, or B39.

The time or the sampling point may be carried in a currently existing trigger frame, for example, the trigger frame shown in FIG. 8c. Alternatively, a new sensing trigger frame may be introduced, and the sensing trigger frame may include the time t or the sampling point n. Table 1 shows an example of a format of the new sensing trigger frame. Table 1 is merely an example, and should not be construed as a limitation on embodiments of this application.

Table 1

| Sensing trigger frame subtype field value (Sensing Trigger Subtype field value) | Sensing trigger frame variant (Sensing Trigger frame variant) |
|---|---|
| ... | ... |
| 4 | SR2SR sounding |
| 5 | Privacy preserving/Secure sounding (Privacy-preserving/Secure Sounding) |
| 6 to 15 | Reserved |

The sensing initiator may indicate the time t or the sampling point n to the sensing responder based on the privacy preserving or secure sounding shown in Table 1. For example, for a format of a user information field of the new sensing trigger frame when an AID is not equal to 2008, refer to FIG. 8a. Details are not described herein again.

Implementation 2

In the implementation 1, the sensing initiator sends the secure parameter, so that the sensing responder generates the plurality of time-variant functions or the time-variant function matrix. In the implementation 2, the sensing initiator generates a time-variant function matrix, and may send the time-variant function matrix to the sensing responder. For example, a row of the time-variant function matrix may correspond to a time-variant function. For example, the time-variant function matrix may have $N_1$ rows or $N_1+x$ rows. The sensing responder receives the time-variant function matrix and stores the time-variant function matrix. In this way, the two communication parties can store the time-variant function matrix. For specific descriptions of the time-variant function matrix, refer to the related descriptions of the matrix (1) or the matrix (2). Details are not described herein again.

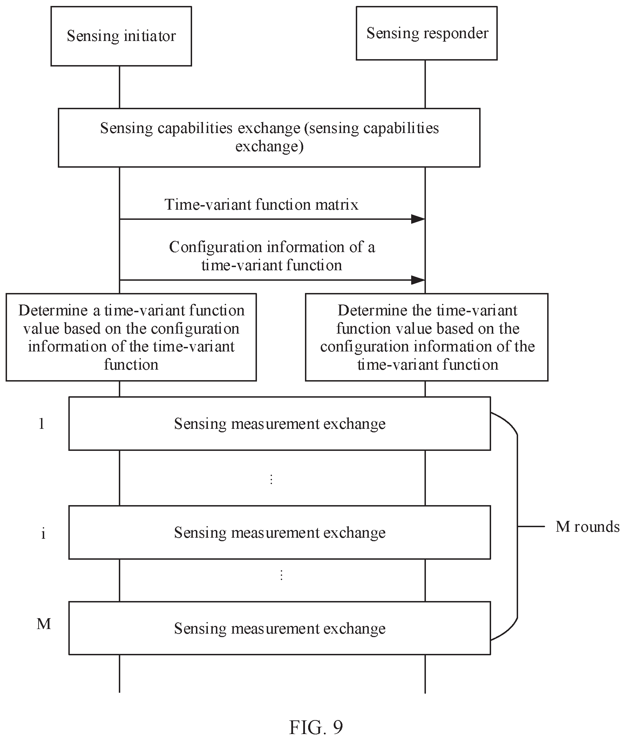

FIG. 9 is yet another diagram of a time-variant function value exchange according to an embodiment of this application. As shown in FIG. 9, the sensing initiator sends the time-variant function matrix to the sensing responder, and may further send the configuration information. The sensing responder receives the time-variant function matrix and the configuration information. After receiving the information, the sensing responder may determine the time-variant function values based on the time-variant function matrix stored by the sensing responder and the received configuration information. It may be understood that FIG. 9 is shown by using an example in which the sensing initiator sends the configuration information. When the time-variant function matrix includes $N_1+x$ time-variant functions, the sensing initiator may further send the index information. The sensing responder receives the index information, and determines $N_1$ time-variant functions from the $N_1+x$ time-variant functions based on the index information. For related descriptions of the configuration information and the index information, refer to the implementation 1. Details are not described herein again.

In the manner of the time-variant function value exchange shown in FIG. 9, the sensing initiator may indicate a sampling interval $\Delta T$ to the sensing responder, so that the sensing responder can effectively learn of the discrete sampling interval $\Delta T$. The sampling interval $\Delta T$ and the time-variant function matrix may be carried in a same frame.

In the implementation 2, a generation manner of a time-variant function is not limited. Therefore, the implementation 2 is more applicable to a scenario in which devices of two communication parties belong to different vendors. The two communication parties may determine the time-variant function value based on the time-variant function matrix and the configuration information, and the sensing responder does not need to learn of the generation manner of a time-variant function.

Implementation 3

A plurality of groups of secure parameters are predefined, for example, the plurality of groups of secure parameters are predefined in a standard. A manner of determining whether the plurality of groups of secure parameters are supported in a sensing capabilities exchange may be as follows: For example, a sensing capabilities element may be extended by an integer multiple of 8 bits, and the extended bits may indicate whether the plurality of groups of secure parameters are supported. If the two communication parties support the plurality of groups of secure parameters after exchanging sensing capabilities, it indicates that the two communication parties have learned of the plurality of groups of secure parameters. Therefore, the sensing initiator may send indexes of the secure parameters and the configuration information to the sensing responder, and the sensing responder receives the indexes of the secure parameters and the configuration information. Alternatively, the sensing initiator sends indexes of the secure parameters, the configuration information, and the index information to the sensing responder, and the sensing responder receives the indexes of the secure parameters, the configuration information, and the index information.

For example, in a sensing measurement session setup process, the sensing initiator may select one of the plurality of groups of secure parameters, and indicate indexes of the group of secure parameters to the sensing responder. After receiving the indexes of the group of secure parameters, the sensing responder generates the $N_1$ time-variant functions, the $N_1+x$ time-variant functions, or the time-variant function matrix based on the secure parameters. For related descriptions of the secure parameters, the configuration information, and the index information, refer to the implementation 1. Details are not described herein again.

Implementation 4

A group of time-variant functions are predefined, for example, the time-variant functions are predefined in a standard.

The sensing initiator sends indexes of the time-variant functions and the configuration information to the sensing responder, and the sensing responder receives the indexes of the time-variant functions and the configuration information. Alternatively, the sensing initiator sends indexes of the time-variant functions, the configuration information, and the index information to the sensing responder, and the sensing responder receives the indexes of the time-variant functions, the configuration information, and the index information.

For example, the sensing initiator may send an index of each of $N_1$ time-variant functions to the sensing responder. Alternatively, when indexes of $N_1$ time-variant functions are continuous indexes, the sensing initiator may send a minimum index and a maximum index in the $N_1$ indexes of the $N_1$ time-variant functions to the sensing responder. For descriptions of the index of the time-variant function, refer to the foregoing descriptions of the index information. Details are not described herein again.

Although this manner requires much pre-stored content, a generation process of time-variant functions is omitted, and a partial procedure is simplified. For related descriptions of the configuration information, the index information, and the indexes of the time-variant functions in the implementation 4, refer to the implementation 1. Details are not described herein again.

In the foregoing implementation 1 to implementation 4, the two communication parties need to determine the time-variant function value by exchanging the secure parameter (or the index of the secure parameter, the index of the time-variant function, or the time-variant function matrix) and the configuration information. In the implementation 1 to the implementation 3, after the two parties exchanges the secure parameter (or the index of the secure parameter or the time-variant function matrix), the time-variant function matrix needs to be stored. In the implementation 4, the two communication parties need to pre-store the time-variant functions. In the following implementation 5 and implementation 6, the two communication parties may not preset a time-variant function, a secure parameter, or a time-variant function matrix. The two communication parties may directly exchange a specific value of the time-variant function, that is, a time-variant function value.

Implementation 5

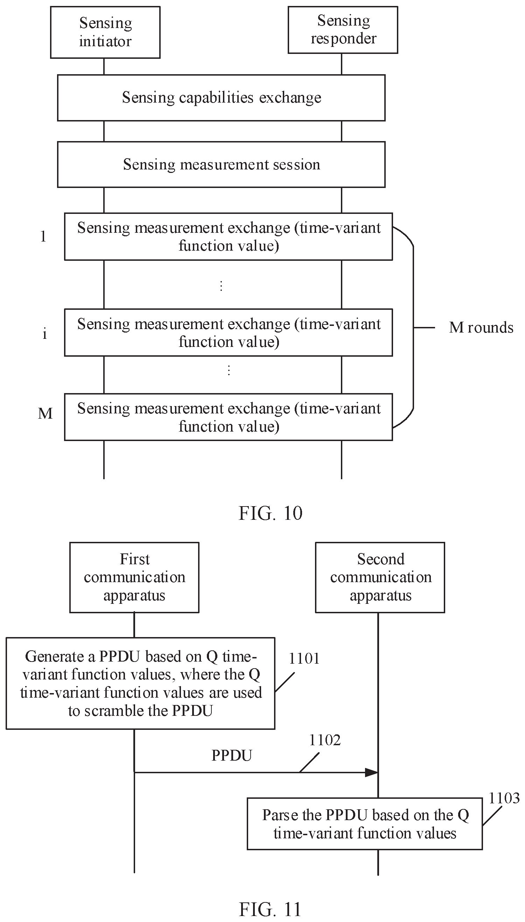

FIG. 10 is still yet another diagram of a time-variant function value exchange according to an embodiment of this application. As shown in FIG. 10, the sensing initiator may send a time-variant function value in a sensing measurement exchange, and the sensing responder receives the time-variant function value in the sensing measurement exchange.

The time-variant function value may be carried in a frame in the sensing measurement exchange. For example, Q time-variant function values may be carried in at least one of a sensing polling trigger frame, a sensing NDPA frame, an SR2SI sounding trigger frame, an SI2SR sounding trigger frame, and an SR2SR sounding trigger frame. For example, the Q time-variant function values carried in the frame may act on each frame in the sensing measurement exchange. For example, $N_1$ time-variant function values carried in the sensing NDPA frame may act on the sensing NDPA frame or a trigger frame, an NDP, or a report frame following the sensing NDPA frame. For another example, the Q time-variant functions carried in the sensing SR2SI sounding trigger frame may act on the SR2SI sounding trigger frame and a frame following the SR2SI sounding trigger frame.

For example, the frame in the current sensing measurement exchange may carry a time-variant function value used by a PPDU in the current sensing measurement exchange. For example, the time-variant function value may be carried in the sensing NDPA frame in the current sensing measurement exchange, and the time-variant function value is used to scramble at least one of an SI2SR NDP or an SR2SI NDP following the sensing NDPA frame in the current sensing measurement exchange. In other words, the time-variant function value in the sensing NDPA frame may act on at least one of the SI2SR NDP or the SR2SI NDP in the current sensing measurement exchange. For example, as shown in FIG. 4a, the time-variant function value in the sensing NDPA frame sent by the AP to the STA 4 to the STA 6 may act on the SI2SR NDP sent by the AP to the STA 4 to the STA 6. For example, as shown in FIG. 4b, the time-variant function value in the sensing NDPA frame sent by the STA to the AP may act on the SI2SR NDP sent by the STA to the AP and the SR2SI NDP sent by the AP to the STA. For another example, the time-variant function value may be carried in the sensing SR2SI sounding trigger frame in the current sensing measurement exchange, and the time-variant function value may be used to scramble an SR2SI NDP following the sensing SR2SI sounding trigger frame in the current sensing measurement exchange. For example, as shown in FIG. 4a, the time-variant function value in the sensing SR2SI sounding trigger frame sent by the AP to the STA 1 and the STA 2 may act on the SR2SI NDP sent by the AP to the STA 1 and the STA 2.

For another example, the frame in the current sensing measurement exchange may carry a time-variant function value used by a PPDU in a next sensing measurement exchange. In this case, a time-variant function value used by a PPDU in a first sensing measurement exchange in M sensing measurement exchanges may be carried in a sensing measurement request frame or a sensing measurement response frame. A time-variant function value used by a PPDU in an $i^{th}$ sensing measurement exchange in the M sensing measurement exchanges may be carried in a frame of an $(i-1)^{th}$ sensing measurement exchange. For example, the time-variant function value in a frame of the $i^{th}$ sensing measurement exchange may act on all PPDUs in an $(i+1)^{th}$ sensing measurement exchange. For another example, the time-variant function value carried in the sensing NDPA frame in the current sensing measurement exchange may act on at least one of an SI2SR NDP or an SR2SI NDP following a sensing NDPA frame in a next sensing measurement exchange. In other words, the time-variant function value in the sensing NDPA frame in the current sensing measurement exchange may act on at least one of the SI2SR NDP or the SR2SI NDP in the next sensing measurement exchange. For another example, the time-variant function value carried in the sensing SR2SI sounding trigger frame in the current sensing measurement exchange may act on an SR2SI NDP following a sensing SR2SI sounding trigger frame in the next sensing measurement exchange.

To further protect the time-variant function value in the exchange, the time-variant function value may be encrypted when the time-variant function value is transmitted via the frame in the sensing measurement exchange. For example, the time-variant function value may be encrypted according to the AES, or may be encrypted in an encryption manner of reusing a secure LTF, or may be encrypted by directly performing XOR on the values of the time-variant functions and a sequence generated based on a secure LTF.

In this embodiment of this application, the two communication parties exchange the time-variant function value in the sensing measurement exchange process, and the sensing initiator may determine the time-variant function value based on a specific implementation. This has higher flexibility.

Implementation 6

The sensing initiator sends, to the sensing responder, a time-variant function value matrix including Q time-variant function values used in each sensing measurement exchange in a current sensing measurement session. The sensing responder receives the time-variant function value matrix. The time-variant function value matrix shown in the implementation 6 is a matrix including the Q time-variant function values. For example, the time-variant function value matrix may include M rows and $N_1$ columns, each row of time-variant function value may correspond to one sensing measurement exchange, and M indicates a number of sensing measurement exchanges in one sensing measurement session.

In the foregoing implementation 1 to implementation 6, for terms that are not described in detail in one implementation, refer to other implementations.

Based on the implementation 1 to the implementation 6, the two communication parties can have a consistent understanding of the time-variant function value. Therefore, the first communication apparatus may scramble a PPDU based on the Q time-variant function values, and the second communication apparatus may descramble the PPDU based on the Q time-variant function values. The PPDU in the sensing measurement exchange process is scrambled based on the time-variant function value, to effectively improve transmission security of the PPDU and effectively protect related information of the target. When the PPDU is not scrambled based on the time-variant function value, the illegitimate device may perform synchronization based on related information in a physical layer header of the PPDU, to obtain channel information between the illegitimate device and the first communication apparatus, and further extract the related information of the target from the channel information. Therefore, the PPDU can be scrambled according to the method provided in embodiments of this application, to effectively improve security of the information in the physical layer header of the PPDU, protect the related information of the target, and preserve user privacy.

FIG. 11 is a schematic flowchart of a sensing communication method according to an embodiment of this application. For a first communication apparatus and a second communication apparatus shown below, refer to FIG. 1, or refer to the sensing procedure shown in FIG. 2, the sensing measurement exchange procedure shown in FIG. 4a and FIG. 4b, or the like. Details are not described herein again. For a manner in which the two communication parties exchange a time-variant function value, refer to the foregoing implementation 1 to implementation 6. As shown in FIG. 11, the method includes the following steps.

1101: The first communication apparatus generates a PPDU based on Q time-variant function values, where the Q time-variant function values are used to scramble the PPDU.

For related descriptions of $N_1$ time-variant function values, the Q time-variant function values, $N_1$ time-variant functions, a time-variant function matrix, and the like, refer to the foregoing descriptions. Details are not described herein again.

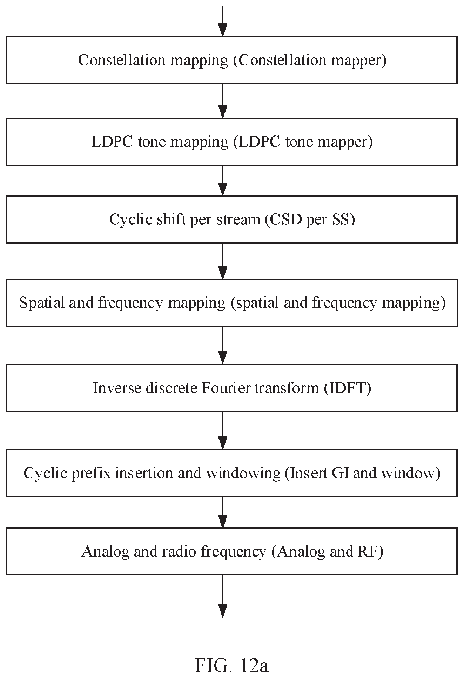

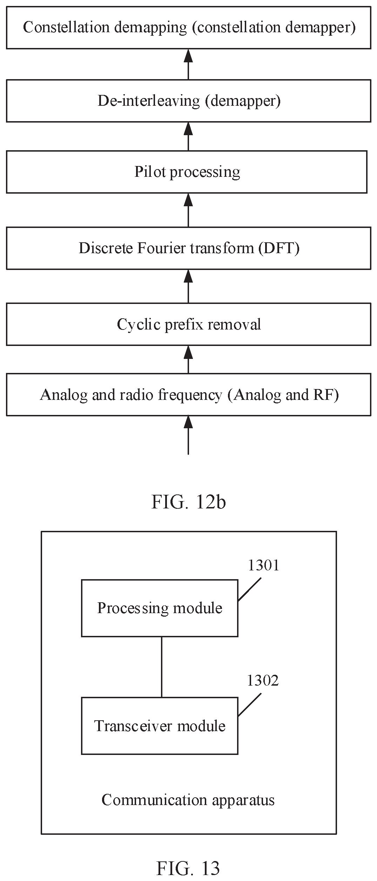

FIG. 12a is a diagram of a partial process in which a first communication apparatus generates a PPDU according to an embodiment of this application. The partial process shown in FIG. 12a may also be referred to as a partial process of sending the PPDU by the first communication apparatus. As shown in FIG. 12a, a process in which the first communication apparatus generates the PPDU may include at least one of the following modules: constellation mapping, low density parity check (low density parity check, LDPC) tone mapping, cyclic shift diversity (cyclic shift diversity, CSD), spatial and frequency mapping (spatial and frequency mapping), inverse discrete Fourier transform, cyclic prefix insertion and windowing (insert GI and window), and analog and radio frequency (analog and RF). For an inverse processing process of FIG. 12a, refer to FIG. 12b.

For example, a step in which the first communication apparatus scrambles the PPDU based on the time-variant function value may be performed after constellation mapping, or before cyclic shift per stream, or after CSD, or before cyclic prefix insertion and windowing, or before IDFT (including IFFT), or after IDFT, or after cyclic prefix insertion and windowing, or before analog and radio frequency.

For example, the entire PPDU may be scrambled based on the time-variant function value. For another example, at least one field of the PPDU may be scrambled based on the time-variant function value. For still another example, one or more fields following a legacy short training field (legacy short training field, L-STF) of the PPDU may be scrambled based on the time-variant function value. Usually, the L-STF may be used for PPDU discovery, coarse synchronization, and automatic gain control. Therefore, the first communication apparatus may not scramble the L-STF, and a function of the first communication apparatus is not affected. Certainly, the first communication apparatus may alternatively scramble the L-STF, to preserve the L-STF and prevent the field from being used for illegal sensing.

For still another example, the time-variant function value is used to scramble at least one of a legacy long training field (legacy long training field, L-LTF), a legacy signal (legacy signal, L-SIG) field, a repeated legacy signal (repeated L-SIG, RL-SIG) field, and a universal signal (universal SIG, U-SIG) field of the PPDU. For example, the PPDU is an ultra-high reliability (ultra-high reliability, UHR) PPDU, and the time-variant function value may be further used to scramble at least one of a UHR-SIG field, a UHR-STF, and a UHR-LTF of the PPDU. For example, the PPDU is a millimeter wave (integrated millimeter wave, MMW) PPDU (including an IMMW PPDU), and the time-variant function value may be further used to scramble at least one of an MMW-SIG field (including an IMMW-SIG field), an MMW-STF (including an IMMW-STF), and an MMW-LTF (including an IMMW-LFT) of the PPDU.

In the process in which the first communication apparatus generates the PPDU, if the time-variant function value is used for scrambling in a frequency domain dimension, scrambling may be performed by using a multiplication operation. If the time-variant function value are used for scrambling in a time domain dimension, scrambling may be performed by using a convolution operation. A specific scrambling manner is not described in detail in this embodiment of this application.

1102: The first communication apparatus sends the PPDU, and correspondingly, the second communication apparatus receives the PPDU.

For example, the first communication apparatus may send the PPDU on $N_3$ transmit antennas. For another example, the first communication apparatus may send the PPDU on $N_2$ spatial streams.

Two transmit antennas are used as an example, and $N_1=1$. When the time-variant function is a first row of the time-variant function matrix, the time-variant function value may be as follows:

$$\begin{bmatrix} 1 & 0 \\ 0 & x_1(t) \end{bmatrix} \quad (3)$$

The matrix (3) is shown by using as an example in which a PPDU sent on a first transmit antenna in the first communication apparatus is not scrambled based on the time-variant function value, and a PPDU sent on a second transmit antenna is scrambled based on the time-variant function value. During specific implementation, the PPDU sent on the first transmit antenna in the first communication apparatus may alternatively be scrambled based on the time-variant function value.

Three transmit antennas are used as an example, and $N_1=2$. When the time-variant functions are a first row and a second row of the time-variant function matrix, the time-variant function values may be as follows:

$$\begin{bmatrix} 1 & 0 & 0 \\ 0 & x_1(t) & 0 \\ 0 & 0 & x_2(t) \end{bmatrix} \quad (4)$$

The matrix (4) is shown by using as an example in which a PPDU sent on a first transmit antenna in the first communication apparatus is not scrambled based on the time-variant function value, and PPDUs sent on a second transmit antenna and a third transmit antenna are scrambled based on the time-variant function values. During specific implementation, the PPDU sent on the first transmit antenna in the first communication apparatus may alternatively be scrambled based on the time-variant function value.

The representation forms of the matrix (3) and the matrix (4) are merely examples, and should not be construed as a limitation on embodiments of this application.

1103: The second communication apparatus parses the PPDU based on the Q time-variant function values.

A process in which the second communication apparatus parses the PPDU based on the Q time-variant function values may be an inverse processing process of the process in which the first communication apparatus generates the PPDU based on the Q time-variant function values.

FIG. 12b is a diagram of a partial process in which a second communication apparatus parses a PPDU according to an embodiment of this application. The partial process shown in FIG. 12b may also be referred to as a partial process of receiving the PPDU by the second communication apparatus. As shown in FIG. 12b, a process in which the second communication apparatus parses the PPDU may include at least one of the following modules: analog and radio frequency, cyclic prefix removal, discrete Fourier transform, pilot processing (or channel estimation, channel equalization, or the like), de-interleaving (demapper), and constellation demapping (constellation demapper). The second communication apparatus may descramble the received PPDU based on a location at which the first communication apparatus scrambles the PPDU. The inverse processing process of the second communication apparatus is not described in detail in this embodiment of this application. In conclusion, the time-variant function value used by the second communication apparatus for descrambling needs to be consistent with the time-variant function value used by the first communication apparatus for scrambling. The first communication apparatus scrambles the PPDU sent in the sensing measurement exchange, to implement privacy preserving. The legitimate second communication apparatus corrects a channel estimated from the PPDU received in the sensing measurement exchange, to obtain a real channel estimation result. Therefore, information about a target can be extracted from the channel information, to implement correct sensing.

In embodiments of this application, the PPDU is scrambled based on the time-variant function value, to effectively improve security of PPDU transmission, and prevent an illegitimate device from obtaining related information of the target by monitoring the PPDU. This improves information security and preserves user privacy.

For ease of description, embodiments of this application are shown by using a "field" as an example, and a "field", a "subfield", an "element", a "subelement", and the like are not specifically distinguished. Although the "field", the "subfield", the "element", and the "subelement" are not specifically distinguished in embodiments shown in this application, a person skilled in the art may adaptively distinguish between relationships between the fields shown in embodiments of this application.

The sensing communication method shown in embodiments of this application may be applied to the sensing procedure shown in FIG. 2, as shown in FIG. 6a to FIG. 6c, FIG. 7a to FIG. 7c, FIG. 8a to FIG. 8c, FIG. 9, and FIG. 10. During specific implementation, the method shown in FIG. 11 may be further applied to a cellular network, for example, a 5G communication system, a 6G communication system, or an IoT communication system. For a specific manner in which FIG. 11 is applied to a cellular network, refer to the foregoing descriptions. Details are not described herein again.

The following describes communication apparatuses provided in embodiments of this application.

In this application, the communication apparatus is divided into functional modules based on the foregoing method embodiments. For example, each functional module may be divided to each corresponding function, or two or more functions may be integrated into one processing module. The integrated module may be implemented in a form of hardware, or may be implemented in a form of a software functional module. It should be noted that, in this application, division into the modules is an example, and is merely a logical function division. During actual implementation, another division manner may be used. The following describes in detail communication apparatuses in embodiments of this application with reference to FIG. 13 to FIG. 15.

FIG. 13 is a diagram of a structure of a communication apparatus according to an embodiment of this application. As shown in FIG. 13, the communication apparatus includes a processing module 1301 and a transceiver module 1302. The transceiver module 1302 may implement a corresponding communication function, and the processing module 1301 is configured to perform data processing. For example, the transceiver module 1302 may also be referred to as an interface, a communication interface, or a communication module.

In some embodiments of this application, the communication apparatus may be configured to perform actions performed by the first communication apparatus in the foregoing method embodiments. In this case, the communication apparatus may be a Wi-Fi device, or a component (for example, a chip, a system, or a functional module) configured in the Wi-Fi device. The transceiver module 1302 is configured to perform a receiving/sending-related operation of the first communication apparatus in the foregoing method embodiments, and the processing module 1301 is configured to perform a processing-related operation of the first communication apparatus in the foregoing method embodiments.

For example, the processing module 1301 is configured to generate a PPDU. The transceiver module 1302 is configured to send or output the PPDU.

For another example, the processing module 1301 is configured to generate time-variant function information and configuration information. The transceiver module 1302 is configured to send or output the time-variant function information and the configuration information.

Still refer to FIG. 13. In some other embodiments of this application, the communication apparatus may be configured to perform actions performed by the second communication apparatus in the foregoing method embodiments. In this case, the communication apparatus may be a Wi-Fi device, or a component (for example, a chip, a system, or a functional module) configured in the Wi-Fi device. The transceiver module 1302 is configured to perform a receiving/-sending-related operation of the second communication apparatus in the foregoing method embodiments, and the processing module 1301 is configured to perform a processing-related operation of the second communication apparatus in the foregoing method embodiments.

For example, the transceiver module 1302 is configured to input or receive a PPDU, and the processing module 1301 is configured to parse the PPDU.

For another example, the transceiver module 1302 is configured to input or receive time-variant function information and configuration information. The processing module 1301 is configured to parse the time-variant function information and the configuration information, to obtain $N_1$ time-variant function values.

Optionally, in the foregoing embodiments, the communication apparatus may further include a storage module. The storage module may be configured to store instructions and/or data (for example, the $N_1$ time-variant functions and the time-variant function values shown above). The processing module 1301 may read the instructions and/or the data in the storage module, so that the communication apparatus implements the foregoing method embodiments.

In the foregoing embodiments, for specific descriptions of terms or steps such as the PPDU, the time-variant function, the time-variant function matrix, the time-variant function value, the secure parameter, the configuration information, and the index information, refer to the descriptions in the foregoing method embodiments. Details are not described herein again.

Specific descriptions of the transceiver module and the processing module shown in the foregoing embodiments are merely examples. For specific functions or steps performed by the transceiver module and the processing module, refer to the foregoing method embodiments. Details are not described herein again.

The foregoing describes the communication apparatus in embodiments of this application. The following describes a possible product form of the communication apparatus. Any form of product that has a function of the communication apparatus described in FIG. 13 falls within the protection scope of embodiments of this application. The following description is merely an example, and a product form of the communication apparatus in embodiments of this application is not limited thereto.

In a possible implementation, in the communication apparatus shown in FIG. 13, the processing module 1301 may be one or more processors, and the transceiver module 1302 may be a transceiver; or the transceiver module 1302 may be a sending module and a receiving module, the sending module may be a transmitter, and the receiving module may be a receiver, the sending module and the receiving module are integrated into one component, for example, a transceiver. In this embodiment of this application, the processor and the transceiver may be coupled, or the like. A connection manner between the processor and the transceiver is not limited in this embodiment of this application. In a process of performing the foregoing method, a process of sending information in the foregoing method may be a process of outputting the foregoing information by the processor. When outputting the information, the processor outputs the information to the transceiver, so that the transceiver transmits the information. After the information is output by the processor, other processing may further need to be performed on the information before the information arrives at the transceiver. Similarly, a process of receiving information in the foregoing method may be a process of receiving the input information by the processor. When the processor receives the input information, the transceiver receives the information, and inputs the information to the processor. Still further, after the transceiver receives the information, other processing may need to be performed on the information before the information is input into the processor.

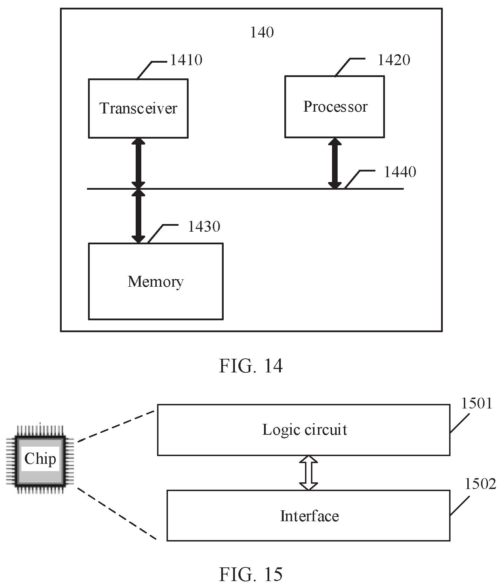

As shown in FIG. 14, a communication apparatus 140 includes one or more processors 1420 and a transceiver 1410.

For example, when the communication apparatus is configured to perform the steps, the methods, or the functions performed by the first communication apparatus, for example, the processor 1420 is configured to generate a PPDU. The transceiver 1410 is configured to send the PPDU.

For another example, the processor 1420 is configured to generate time-variant function information and configuration information. The transceiver 1410 is configured to send the time-variant function information and the configuration information.

For example, when the communication apparatus is configured to perform the steps, the methods, or the functions performed by the second communication apparatus, for example, the transceiver 1410 is configured to receive a PPDU, and the processor 1420 is further configured to parse the PPDU.

For another example, the transceiver 1410 is configured to receive time-variant function information and configuration information. The processor 1420 is configured to parse the time-variant function information and the configuration information, to obtain $N_1$ time-variant function values.

In the foregoing embodiments, for specific descriptions of terms or steps such as the PPDU, the time-variant function, the time-variant function matrix, the time-variant function value, the secure parameter, the configuration information, and the index information, refer to the descriptions in the foregoing method embodiments. Details are not described herein again.

In each implementation of the communication apparatus shown in FIG. 14, the transceiver may include a receiver and a transmitter. The receiver is configured to perform a function (or an operation) of receiving, and the transmitter is configured to perform a function (or an operation) of transmitting. The transceiver is configured to communicate with another device/apparatus through a transmission medium.

Optionally, the communication apparatus 140 may further include one or more memories 1430, configured to store program instructions and/or data. The memory 1430 is coupled to the processor 1420. Coupling in embodiments of this application is indirect coupling or communication connection between apparatuses, units, or modules, and may be in an electrical, mechanical, or another form, and is used for information exchange between the apparatuses, units, or modules. The processor 1420 may cooperate with the memory 1430. The processor 1420 may execute the program instructions stored in the memory 1430. Optionally, at least one of the one or more memories may be included in the processor. For example, the memory may be configured to store the $N_1$ time-variant function values. For another example, the memory may be configured to store $N_1$ time-variant functions or a time-variant function matrix.

A specific connection medium between the transceiver 1410, the processor 1420, and the memory 1430 is not limited in this embodiment of this application. In this embodiment of this application, the memory 1430, the processor 1420, and the transceiver 1410 are connected by using a bus 1440 in FIG. 14. The bus is represented by using a thick line in FIG. 14. A manner of connection between other components is merely an example for description, and is not limited thereto. The bus may be classified into an address bus, a data bus, a control bus, and the like. For ease of representation, only one bold line is used in FIG. 14 for representation, but this does not mean that there is only one bus or only one type of bus.

In this embodiment of this application, the processor may be a general-purpose processor, a digital signal processor, an application-specific integrated circuit, a field programmable gate array or another programmable logic device, a discrete gate or transistor logic device, a discrete hardware component, or the like. The processor can implement or execute the methods, the steps, and the logical block diagrams disclosed in embodiments of this application. The general-purpose processor may be a microprocessor, any conventional processor, or the like. The steps of the methods disclosed in combination with embodiments of this application may be directly implemented by a hardware processor, or may be implemented by using a combination of hardware and software modules in the processor, or the like.

In this embodiment of this application, the memory may include but is not limited to a non-volatile memory like a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), or a portable read-only memory (Compact Disc Read-Only Memory, CD-ROM). The memory is any storage medium that can be used to carry or store program code in a form of instructions or a data structure and that can be read and/or written by a computer (for example, the communication apparatus shown in this application). However, this application is not limited thereto. The memory in embodiments of this application may alternatively be a circuit or any other apparatus that can implement a storage function, and is configured to store the program instructions and/or the data. For example, the memory may be configured to store the time-variant function matrix, the secure parameter, the time-variant function, or the like.

The processor 1420 is mainly configured to process a communication protocol and communication data, control the communication apparatus, execute a software program, and process data of the software program. The memory 1430 is mainly configured to store the software program and the data. The transceiver 1410 may include a control circuit and an antenna. The control circuit is mainly configured to: perform conversion between a baseband signal and a radio frequency signal, and process the radio frequency signal. The antenna is mainly configured to receive and send a radio frequency signal in a form of an electromagnetic wave. An input/output apparatus like a touchscreen, a display, or a keyboard is mainly configured to: receive data input by a user and output data to the user.

After the communication apparatus is powered on, the processor 1420 may read a software program in the memory 1430, explain and execute instructions of the software program, and process data of the software program. When data needs to be sent in a wireless manner, after performing baseband processing on to-be-sent data, the processor 1420 outputs a baseband signal to the radio frequency circuit. After performing radio frequency processing on the baseband signal, the radio frequency circuit sends a radio frequency signal through an antenna in a form of an electromagnetic wave. When data is sent to the communication apparatus, the radio frequency circuit receives the radio frequency signal through the antenna, converts the radio frequency signal into a baseband signal, and outputs the baseband signal to the processor 1420. The processor 1420 converts the baseband signal into data and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

The communication apparatus shown in embodiments of this application may further have more components than those in FIG. 14, or the like. This is not limited in embodiments of this application. The methods performed by the processor and the transceiver are merely examples. For specific steps performed by the processor and the transceiver, refer to the methods described above.

In another possible implementation, in the communication apparatus shown in FIG. 13, the processing module 1301 may be one or more logic circuits, and the transceiver module 1302 may be an input/output interface, which is also referred to as a communication interface, an interface circuit, an interface, or the like. Alternatively, the transceiver module 1302 may be a sending module and a receiving module. The sending module may be an output interface, and the receiving module may be an input interface. The sending module and the receiving module are integrated into one module, for example, an input/output interface. As shown in FIG. 15, the communication apparatus shown in FIG. 15 includes a logic circuit 1501 and an interface 1502. In other words, the processing module 1301 may be implemented by using the logic circuit 1501, and the transceiver module 1302 may be implemented by using the interface 1502. The logic circuit 1501 may be a chip, a processing circuit, an integrated circuit, a system on chip (system on chip, SoC), or the like. The interface 1502 may be a communication interface, an input/output interface, a pin, or the like. For example, FIG. 15 shows an example in which the communication apparatus is a chip. The chip includes the logic circuit 1501 and the interface 1502. For example, the chip may also include a memory, and the memory may be configured to store $N_1$ time-variant function values, $N_1$ time-variant functions, a time-variant function matrix, and the like. Alternatively, the memory may be configured to store computer instructions. For example, the logic circuit 1501 may perform, based on the instructions, the methods, the functions, or the steps performed by the first communication apparatus. For another example, the logic circuit 1501 may perform, based on the instructions, the methods, the functions, or the steps performed by the second communication apparatus.

In embodiments of this application, the logic circuit may be further coupled to the interface. A specific manner of connection between the logic circuit and the interface is not limited in this embodiment of this application.

For example, when the communication apparatus is configured to perform the methods, the functions, or the steps performed by the first communication apparatus, for example, the logic circuit 1501 is configured to generate a PPDU, and the interface 1502 is configured to output the PPDU.

For another example, the logic circuit 1501 is configured to generate time-variant function information and configuration information. The interface 1502 is configured to output the time-variant function information and the configuration information.

For example, when the communication apparatus is configured to perform the methods, the functions, or the steps performed by the second communication apparatus, for example, the interface 1502 is configured to input a PPDU, and the logic circuit 1501 is configured to parse the PPDU.

For another example, the interface 1502 is configured to input time-variant function information and configuration information. The logic circuit 1501 is configured to parse the time-variant function information and the configuration information, to obtain $N_1$ time-variant function values.

The communication apparatus shown in this embodiment of this application may implement the methods provided in embodiments of this application in a form of hardware, or may implement the methods provided in embodiments of this application in a form of software. This is not limited in this embodiment of this application.

In the foregoing embodiments, for specific descriptions of terms or steps such as the PPDU, the time-variant function, the time-variant function matrix, the time-variant function value, the secure parameter, the configuration information, and the index information, refer to the descriptions in the foregoing method embodiments. Details are not described herein again. For specific implementations of the embodiment shown in FIG. 15, refer to the foregoing embodiments. Details are not described herein again.

An embodiment of this application further provides a wireless communication system. The wireless communication system includes a first communication apparatus and a second communication apparatus. The first communication apparatus and the second communication apparatus may be configured to perform the method in any one of the foregoing embodiments.

In addition, this application further provides a computer program. The computer program is used to implement operations and/or processing performed by the first communication apparatus device in the methods provided in this application.

This application further provides a computer program. The computer program is used to implement operations and/or processing performed by the second communication apparatus device in the methods provided in this application.

This application further provides a computer-readable storage medium. The computer-readable storage medium stores computer code. When the computer code is run on a computer, the computer is enabled to perform operations and/or processing performed by the first communication apparatus device in the methods provided in this application.

This application further provides a computer-readable storage medium. The computer-readable storage medium stores computer code. When the computer code is run on a computer, the computer is enabled to perform operations and/or processing performed by the second communication apparatus device in the methods provided in this application.

This application further provides a computer program product. The computer program product includes computer code or a computer program. When the computer code or the computer program is run on a computer, operations and/or processing performed by the first communication apparatus device in the methods provided in this application are/is performed.

This application further provides a computer program product. The computer program product includes computer code or a computer program. When the computer code or the computer program is run on a computer, operations and/or processing performed by the second communication apparatus device in the methods provided in this application are/is performed.

In the several embodiments provided in this application, it should be understood that the disclosed system, apparatus, and method may be implemented in another manner. For example, the described apparatus embodiment is merely an example. For example, division into the modules is merely logical function division and may be another division manner during actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or the communication connections between the apparatuses or the units may be implemented in an electrical form, a mechanical form, or another form.

The modules described as separate parts may or may not be physically separate, and parts displayed as modules may or may not be physical modules, may be located in one position, or may be distributed on a plurality of network modules. Some or all of the modules may be selected based on an actual requirement to implement technical effect of the solutions provided in embodiments of this application.

In addition, functional modules in embodiments of this application may be integrated into one processing module, or each of the modules may exist alone physically, or two or more modules may be integrated into one module. The integrated module may be implemented in a form of hardware, or may be implemented in a form of a software functional module.

When the integrated module is implemented in the form of a software functional module and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a readable-storage medium, and includes several instructions for instructing a computer device (which may be a personal computer, a server, a network device, or the like) to perform all or some of the steps of the methods described in embodiments of this application. The readable storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

**Claims**

1. A sensing communication method, wherein the method is applied to a first communication apparatus, and the method comprises:

   generating a physical layer convergence procedure PLCP protocol data unit PPDU based on Q time-variant function values, wherein the Q time-variant function values are used to scramble the PPDU, the Q time-variant function values are determined according to $N_1$ time-variant functions, and a difference between any two of the $N_1$ time-variant functions meets a characteristic of varying with time, or a quotient of any two of the $N_1$ time-variant functions meets a characteristic of varying with time, wherein $N_1$ is an integer greater than or equal to 2, and Q is an integer less than or equal to $N_1$; and
   sending the PPDU.

2. The method according to claim 1, wherein a frequency range corresponding to the time-variant function is greater than a Doppler frequency range generated by a target.

3. The method according to claim 2, wherein a frequency range corresponding to the time-variant function in a sensing time window is greater than the Doppler frequency range generated by the target, and the sensing time window is a time window of a sensing procedure corresponding to a sensing application.

4. The method according to any one of claims 1 to 3, wherein the Q time-variant function values are determined according to the $N_1$ time-variant functions and configuration information, and the configuration information comprises at least one of the following: time t, sampling start time $t_0$, a sampling point n, a sampling start point $n_0$, and a selecting interval T.

5. The method according to any one of claims 1 to 4, wherein $N_1$ is less than or equal to $N_2$, and $N_2$ indicates a number of spatial streams used to transmit the PPDU; or $N_1$ is less than or equal to $N_3$, and $N_3$ indicates a number of antennas used to send the PPDU.

6. The method according to any one of claims 1 to 5, wherein the time-variant function value is used to scramble one or more of a legacy long training field L-LTF, a legacy signal L-SIG field, a repeated legacy signal RL-SIG field, and a universal signal U-SIG field that follow a legacy short training field L-STF of the PPDU.

7. The method according to any one of claims 1 to 6, wherein

   the PPDU is used to carry at least one of the following frames: a sensing polling trigger frame, a sensing null data packet announcement NDPA frame, a sensing responder-to-sensing initiator SR2SI sounding trigger frame, a sensing reporting trigger frame, a clear to send-to-self CST2SELF frame, and a sensing measurement report frame; or
   the PPDU is an NDP that does not comprise a data field, and the NDP is at least one of the following: a sensing initiator-to-sensing responder SI2SR null data packet NDP, an SR2SI NDP, and an SR2SR NDP.

8. The method according to any one of claims 1 to 7, wherein before the generating the PPDU based on the Q time-variant function values, the method further comprises:

sending a sensing capabilities element, wherein the sensing capabilities element comprises indication information, and the indication information indicates whether the first communication apparatus supports scrambling the PPDU based on the time-variant function value.

9. The method according to any one of claims 1 to 8, wherein before the generating the PPDU based on the Q time-variant function values, the method further comprises:
   sending a secure parameter, wherein the secure parameter is used to generate the $N_1$ time-variant functions; or the secure parameter is used to generate $N_1+x$ time-variant functions, and x is a positive integer.

10. The method according to any one of claims 1 to 8, wherein before the generating the PPDU based on the Q time-variant function values, the method further comprises:
    sending a time-variant function matrix, wherein a row of the time-variant function matrix corresponds to a time-variant function, and a column of the time-variant function matrix corresponds to different time; or a column of the time-variant function matrix corresponds to a time-variant function, and a row of the time-variant function matrix corresponds to different time.

11. The method according to claim 9 or 10, wherein the method further comprises:
    sending the configuration information, wherein the configuration information comprises at least one of the following:
    the time t, the sampling start time $t_0$, the sampling point n, the sampling start point $n_0$, and the selecting interval T.

12. The method according to any one of claims 4 to 11, wherein the sampling point n corresponds to an identifier of a current sensing measurement exchange; or the sampling point n is carried in any one of the following:
    a sensing measurement request frame, a sensing polling trigger frame, a sensing null data packet announcement NDPA frame, a sensing responder-to-sensing initiator SR2SI sounding trigger frame, a sensing initiator-to-sensing responder SI2SR sounding trigger frame, and a sensing responder-to-sensing responder SR2SR sounding trigger frame.

13. The method according to any one of claims 9 to 12, wherein when the secure parameter is used to generate the $N_1+x$ time-variant functions, or a number of time-variant functions in the time-variant function matrix is greater than $N_1$, the method further comprises:
    sending index information, wherein the index information indicates the $N_1$ time-variant functions in the time-variant function matrix or the $N_1+x$ time-variant functions.

14. The method according to any one of claims 1 to 8, wherein before the generating the PPDU based on the Q time-variant function values, the method further comprises:
    sending the Q time-variant function values, wherein the Q time-variant function values are carried in at least one of a sensing polling trigger frame, a sensing null data packet announcement NDPA frame, a sensing responder-to-sensing initiator SR2SI sounding trigger frame, a sensing initiator-to-sensing responder SI2SR sounding trigger frame, and a sensing responder-to-sensing responder SR2SR sounding trigger frame in a current sensing measurement exchange; or the Q time-variant function values are carried in at least one of a sensing polling trigger frame, a sensing null data packet announcement NDPA frame, a sensing responder-to-sensing initiator SR2SI sounding trigger frame, a sensing initiator-to-sensing responder SI2SR sounding trigger frame, and a sensing responder-to-sensing responder SR2SR sounding trigger frame in a previous sensing measurement exchange.

15. The method according to claim 14, wherein the Q time-variant function values are carried in the sensing NDPA frame in the current sensing measurement exchange, and the Q time-variant function values are used to scramble at least one of an SI2SR NDP or an SR2SI NDP following the sensing NDPA frame in the current sensing measurement exchange.

16. The method according to claim 14, wherein the Q time-variant function values are carried in the sensing responder-to-sensing initiator SR2SI sounding trigger frame in the current sensing measurement exchange, and the Q time-variant function values are used to scramble an SR2SI NDP following the SR2SI sounding trigger frame in the current sensing measurement exchange.

17. A sensing communication method, wherein the method is applied to a second communication apparatus, and the method comprises:

   receiving a physical layer convergence procedure PLCP protocol data unit PPDU; and
   parsing the PPDU based on Q time-variant function values, wherein the Q time-variant function values are used to descramble the PPDU, the Q time-variant function values are determined according to $N_1$ time-variant functions, and a difference between any two of the $N_1$ time-variant functions meets a characteristic of varying with time, or a quotient of any two of the $N_1$ time-variant functions meets a characteristic of varying with time, wherein $N_1$ is an integer greater than or equal to 2, and Q is an integer less than or equal to $N_1$.

18. The method according to claim 17, wherein a frequency range corresponding to the time-variant function is greater than a Doppler frequency range generated by a target.

19. The method according to claim 18, wherein a frequency range corresponding to the time-variant function in a sensing time window is greater than the Doppler frequency range generated by the target, and the sensing time window is a time window of a sensing procedure corresponding to a sensing application.

20. The method according to any one of claims 17 to 19, wherein the Q time-variant function values are determined according to the $N_1$ time-variant functions and configuration information, and the configuration information comprises at least one of the following: time t, sampling start time $t_0$, a sampling point n, a sampling start point $n_0$, and a selecting interval T.

21. The method according to any one of claims 17 to 20, wherein $N_1$ is less than or equal to $N_2$, and $N_2$ indicates a number of spatial streams used to transmit the PPDU; or $N_1$ is less than or equal to $N_3$, and $N_3$ indicates a number of antennas used to send the PPDU.

22. The method according to any one of claims 17 to 21, wherein the time-variant function value is used to descramble one or more of a legacy long training field L-LTF, a legacy signal L-SIG field, a repeated legacy signal RL-SIG field, and a universal signal U-SIG field that follow a legacy short training field L-STF of the PPDU.

23. The method according to any one of claims 17 to 22, wherein

the PPDU is used to carry at least one of the following frames: a sensing polling trigger frame, a sensing null data packet announcement NDPA frame, a sensing responder-to-sensing initiator SR2SI sounding trigger frame, a sensing reporting trigger frame, a clear to send-to-self CST2SELF frame, and a sensing measurement report frame; or
the PPDU is an NDP that does not comprise a data field, and the NDP is at least one of the following: a sensing initiator-to-sensing responder SI2SR null data packet NDP, an SR2SI NDP, and an SR2SR NDP.

24. The method according to any one of claims 17 to 23, wherein before the receiving the PPDU, the method further comprises:
receiving a sensing capabilities element, wherein the sensing capabilities element comprises indication information, and the indication information indicates whether the first communication apparatus supports scrambling the PPDU based on the time-variant function value.

25. The method according to any one of claims 17 to 24, wherein before the receiving the PPDU, the method further comprises:
receiving a secure parameter, wherein the secure parameter is used to generate the $N_1$ time-variant functions; or the secure parameter is used to generate $N_1+x$ time-variant functions, and x is a positive integer.

26. The method according to any one of claims 17 to 25, wherein before the receiving the PPDU, the method further comprises:
receiving a time-variant function matrix, wherein a row of the time-variant function matrix corresponds to a time-variant function, and a column of the time-variant function matrix corresponds to different time; or a column of the time-variant function matrix corresponds to a time-variant function, and a row of the time-variant function matrix corresponds to different time.

27. The method according to claim 25 or 26, wherein the method further comprises:
receiving the configuration information, wherein the configuration information comprises at least one of the following: the time t, the sampling start time $t_0$, the sampling point n, the sampling start point $n_0$, and the selecting interval T.

28. The method according to any one of claims 20 to 27, wherein the sampling point n corresponds to an identifier of a current sensing measurement exchange; or the sampling point n is carried in any one of the following:

a sensing measurement request frame, a sensing polling trigger frame, a sensing null data packet announcement NDPA frame, a sensing responder-to-sensing initiator SR2SI sounding trigger frame, a sensing initiator-to-sensing responder SI2SR sounding trigger frame, and a sensing responder-to-sensing responder SR2SR sounding trigger frame.

29. The method according to any one of claims 25 to 28, wherein when the secure parameter is used to generate the $N_1+x$ time-variant functions, or a number of time-variant functions in the time-variant function matrix is greater than $N_1$, the method further comprises:
receiving index information, wherein the index information indicates the $N_1$ time-variant functions in the time-variant function matrix or the $N_1+x$ time-variant functions.

30. The method according to any one of claims 1 to 8, wherein before the receiving the PPDU, the method further comprises:
receiving the Q time-variant function values, wherein the Q time-variant function values are carried in at least one of a sensing polling trigger frame, a sensing null data packet announcement NDPA frame, a sensing responder-to-sensing initiator SR2SI sounding trigger frame, a sensing initiator-to-sensing responder SI2SR sounding trigger frame, and a sensing responder-to-sensing responder SR2SR sounding trigger frame in a current sensing measurement exchange; or the Q time-variant function values are carried in at least one of a sensing polling trigger frame, a sensing null data packet announcement NDPA frame, a sensing responder-to-sensing initiator SR2SI sounding trigger frame, a sensing initiator-to-sensing responder SI2SR sounding trigger frame, and a sensing responder-to-sensing responder SR2SR sounding trigger frame in a previous sensing measurement exchange.

31. The method according to claim 30, wherein the Q time-variant function values are carried in the sensing NDPA frame in the current sensing measurement exchange, and the Q time-variant function values are used to descramble at least one of an SI2SR NDP or an SR2SI NDP following the sensing NDPA frame in the current sensing measurement exchange.

32. The method according to claim 30, wherein the Q time-variant function values are carried in the sensing responder-to-sensing initiator SR2SI sounding trigger frame in the current sensing measurement exchange, and the Q time-variant function values are used to descramble an SR2SI NDP following the SR2SI sounding trigger frame in the current sensing measurement exchange.

33. A communication apparatus, comprising a module configured to perform the method according to any one of claims 1 to 32.

34. A communication apparatus, comprising a processor, wherein the processor is configured to perform the method according to any one of claims 1 to 32.

35. A communication apparatus, comprising a logic circuit and an interface, wherein the logic circuit is coupled to the interface; and
the interface is configured to input and/or output information, and the logic circuit is configured to perform the method according to any one of claims 1 to 32.

36. A computer-readable storage medium, wherein the computer-readable storage medium is configured to store a computer program, and when the computer program is executed, the method according to any one of claims 1 to 32 is performed.

37. A communication system, comprising a first communication apparatus and a second communication apparatus, wherein the first communication apparatus is configured to perform the method according to any one of claims 1 to 16, and the second communication apparatus is configured to perform the method according to any one of claims 17 to 32.

FIG. 1

FIG. 2

| Element ID (element ID) | Length (length) | Element ID extension (element ID extension) | Sensing (sensing) |
|---|---|---|---|

Octets (octets)     1         1         1         9

| Responder needed (responder needed) | Bandwidth (BW) | ... | Secure sensing supported (secure sensing supported) |
|---|---|---|---|

Bits (Bits)     1         3                1

FIG. 3

FIG. 4a

FIG. 4b

FIG. 5a

FIG. 5b

```
┌─────────────────────┐                    ┌─────────────────────┐
│  Sensing initiator  │                    │  Sensing responder  │
└─────────────────────┘                    └─────────────────────┘
           │                                          │
┌──────────────────────────────────────────────────────────────┐
│ Sensing capabilities exchange (sensing capabilities exchange) │
└──────────────────────────────────────────────────────────────┘
           │              Secure parameter            │
           │ ────────────────────────────────────────►│
           │                                          │
┌─────────────────────────┐              ┌─────────────────────────┐
│ Generate a time-variant │              │  Generate the time-vari │
│ function based on the   │              │  ant function based on  │
│ secure parameter        │              │  the secure parameter   │
└─────────────────────────┘              └─────────────────────────┘
           │   Configuration information of the       │
           │         time-variant function            │
           │ ────────────────────────────────────────►│
           │                                          │
┌─────────────────────────┐              ┌─────────────────────────┐
│ Determine a time-variant│              │ Determine the time-variant│
│ function value based on │              │ function value based on │
│ the configuration       │              │ the configuration       │
│ information of the      │              │ information of the      │
│ time-variant function   │              │ time-variant function   │
└─────────────────────────┘              └─────────────────────────┘
```

1   Sensing measurement exchange

⋮

i   Sensing measurement exchange                    M rounds

⋮

M   Sensing measurement exchange

FIG. 6a

| Sensing initiator | Sensing responder |
|---|---|

Sensing capabilities exchange (sensing capabilities exchange)

Secure parameter + configuration information of a time-variant function

| Generate the time-variant function based on the secure parameter and determine a time-variant function value based on the configuration information of the time-variant function | Generate the time-variant function based on the secure parameter and determine the time-variant function value based on the configuration information of the time-variant function |
|---|---|

1    Sensing measurement exchange

⋮

i    Sensing measurement exchange

⋮

M    Sensing measurement exchange

M rounds

FIG. 6b

| Sensing initiator | | Sensing responder |
|---|---|---|

Sensing capabilities exchange (sensing capabilities exchange)

Configuration of a time-variant function

1 — Sensing measurement exchange (sample the time-variant configuration)

⋮

i — Sensing measurement exchange (sample the time-variant configuration)

⋮

M — Sensing measurement exchange (sample the time-variant configuration)

M rounds

FIG. 6c

| Category | Public Action/ Protected Dual of Public Action Public action/ Protected dual of public action | Dialog Token Dialog token | Sensing Comeback Info Sensing comeback information | Measurement Session ID Indication Measurement session ID indication | Sensing Measurement Parameters Element Sensing measurement parameters element | Secure sensing element Secure sensing element |
|---|---|---|---|---|---|---|
| Octets: 8 bits: 1 | 1 | 1 | 1 | 1 | 0 or variable | 0 or variable |

| Element ID Element ID | Length Length | Element ID Extension Element ID extension | Sensing Measurement Parameters Sensing measurement parameters | Sensing subelements Sensing subelements |
|---|---|---|---|---|
| Octets: 8 bits: 1 | 1 | 1 | 5 | Variable |

FIG. 7a

EP 4 761 310 A1

| Category Category | Public Action/ Protected Dual of Public Action Public action/ Protected dual of public action | Dialog Token Dialog token | Sensing Comeback Info Sensing comeback information | Measurement Session ID Indication Measurement session ID indication | Sensing Measurement Parameters Element Sensing measurement parameters element | Secure Sensing element Secure sensing element |
|---|---|---|---|---|---|---|

Octets: 8 bits: 1    1    1    1    1    0 or variable    0 or variable

| Element ID Element ID | Length Length | Element ID Extension Element ID extension | Secure Sensing Parameters Secure sensing parameters |
|---|---|---|---|

Octets: 8 bits: 1    1    1    5

| Start Index Start index | Sampling Interval Sampling interval | Secure Parameters Secure parameters |
|---|---|---|

Bits: Bits: TBD    TBD    TBD

FIG. 7b

**Category** — 1 octet

**Public Action/ Protected Dual of Public Action** — 1 octet

**Dialog Token** — 1 octet

**Sensing Comeback Info** — 1 octet

**Measurement Session ID Indication** — 1 octet

**Sensing Measurement Parameters Element** — 0 or variable

**Secure Sensing element** — 0 or variable

Octets: 8 bits:

---

**Element ID** — 1 octet

**Length** — 1 octet

**Element ID Extension** — 1 octet

**Secure Sensing Parameters** — 5 octets

Octets: 8 bits:

---

**Secure Mask Start** — TBD bits

**Secure Mask End** — TBD bits

**Start Index** — TBD bits

**Selecting interval** — TBD bits

**Secure Parameters** — TBD bits

Bits:

FIG. 7c

| B0　　　B10 | B11　　　B16 | B17　　　B19 | B20　　　B22 | B23　　　B25 | B26 | B27 | B28　　　B30 | B31 |
|---|---|---|---|---|---|---|---|---|
| AID11 Association identifier 11 | Reserved Reserved | SR2SI NSTS Sensing responder-to-sensing initiator number of space-time streams | SR2SI Rep Sensing responder-to-sensing initiator repetition | SI2SR NSTS Sensing initiator-to-sensing responder number of space-time streams | Reserved Reserved | Disambiguation Disambiguation | SI2SR Rep Sensing initiator-to-sensing responder repetition | Reserved Reserved |
| Bits: Bits: 11 | 6 | 3 | 3 | 3 | 1 | 1 | 3 | 1 |

FIG. 8a

| B0 | B10 | B11 | B26 | B27 | B28 | B31 |
|---|---|---|---|---|---|---|
| AID: 2046 Association ID: 2046 | | To be used To be used | | Disambiguation Disambiguation | To be used To be used | |

Bits:
Bits:

| 1 | 16 | 1 | 4 |
|---|---|---|---|

FIG. 8b

| B0     B12 | B12   B20 | B21   B23 | B24   B25 | B26         B31 | B32       B38 | B39 |
|---|---|---|---|---|---|---|
| AID12/ USID12 Association identifier 12/ Unassociated identifier 12 | Reserved Reserved | SR2SI Rep Sensing responder-to-sensing initiator repetition | Reserved Reserved | SS Allocation/RA-RU Information Spatial stream allocation/RA-RU information | UL Target Receive Power Uplink target receive power | Reserved Reserved |
| Bits: Bits: 12 | 9 | 3 | 2 | 3 | 1 | 1 |

FIG. 8c

EP 4 761 310 A1

| Sensing initiator | | Sensing responder |
|---|---|---|

Sensing capabilities exchange (sensing capabilities exchange)

Time-variant function matrix

Configuration information of a time-variant function

| Determine a time-variant function value based on the configuration information of the time-variant function | Determine the time-variant function value based on the configuration information of the time-variant function |
|---|---|

1 — Sensing measurement exchange

⋮

i — Sensing measurement exchange

⋮

M — Sensing measurement exchange

M rounds

FIG. 9

Sensing initiator

Sensing responder

Sensing capabilities exchange

Sensing measurement session

1 Sensing measurement exchange (time-variant function value)

⋮

i Sensing measurement exchange (time-variant function value)

⋮

M Sensing measurement exchange (time-variant function value)

M rounds

FIG. 10

First communication apparatus

Second communication apparatus

Generate a PPDU based on Q time-variant function values, where the Q time-variant function values are used to scramble the PPDU — 1101

PPDU — 1102

Parse the PPDU based on the Q time-variant function values — 1103

FIG. 11

Constellation mapping (Constellation mapper)

↓

LDPC tone mapping (LDPC tone mapper)

↓

Cyclic shift per stream (CSD per SS)

↓

Spatial and frequency mapping (spatial and frequency mapping)

↓

Inverse discrete Fourier transform (IDFT)

↓

Cyclic prefix insertion and windowing (Insert GI and window)

↓

Analog and radio frequency (Analog and RF)

↓

FIG. 12a

Constellation demapping (constellation demapper)

↑

De-interleaving (demapper)

↑

Pilot processing

↑

Discrete Fourier transform (DFT)

↑

Cyclic prefix removal

↑

Analog and radio frequency (Analog and RF)

↑

FIG. 12b

1301

Processing module

1302

Transceiver module

Communication apparatus

FIG. 13

140

1410

Transceiver

1420

Processor

1440

1430

Memory

FIG. 14

Chip

Logic circuit

1501

Interface

1502

FIG. 15

## INTERNATIONAL SEARCH REPORT

| International application No. |
| --- |
| **PCT/CN2024/111899** |

| A. | CLASSIFICATION OF SUBJECT MATTER |
| --- | --- |

H04W12/03(2021.01)i

According to International Patent Classification (IPC) or to both national classification and IPC

| B. | FIELDS SEARCHED |
| --- | --- |

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNTXT, ENTXT, DWPI, CNKI, IEEE: 感知, 加扰, 解扰, 时变函数, 时间, 变化, 多普勒, 频率, 采样, 训练, 解析, sensing, scrambl+, descrambl+, PLCP, PPDU, time, frequency

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 116074884 A (HUAWEI TECHNOLOGIES CO., LTD.) 05 May 2023 (2023-05-05) description, paragraphs 152-338 | 1-37 |
| A | CN 115484606 A (HUAWEI TECHNOLOGIES CO., LTD.) 16 December 2022 (2022-12-16) entire document | 1-37 |
| A | CN 115868201 A (PANASONIC INTELLECTUAL PROPERTY CORP. OF AMERICA) 28 March 2023 (2023-03-28) entire document | 1-37 |
| A | US 2023239671 A1 (INTEL CORP.) 27 July 2023 (2023-07-27) entire document | 1-37 |
| A | WO 2023068663 A1 (LG ELECTRONICS INC.) 27 April 2023 (2023-04-27) entire document | 1-37 |
| A | WO 2023097704 A1 (GUANGDONG OPPO MOBILE TELECOMMUNICATIONS CORP., LTD.) 08 June 2023 (2023-06-08) entire document | 1-37 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **04 November 2024** | **18 November 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/111899**

| Patent document cited in search report | | | Publication date (day/month/year) | Patent family member(s) | | | Publication date (day/month/year) |
|---|---|---|---|---|---|---|---|
| CN | 116074884 | A | 05 May 2023 | WO | 2023072130 | A1 | 04 May 2023 |
| | | | | EP | 4412296 | A1 | 07 August 2024 |
| CN | 115484606 | A | 16 December 2022 | WO | 2022262688 | A1 | 22 December 2022 |
| | | | | EP | 4354744 | A1 | 17 April 2024 |
| CN | 115868201 | A | 28 March 2023 | JP | 2023538286 | A | 07 September 2023 |
| | | | | EP | 4201096 | A1 | 28 June 2023 |
| | | | | US | 2023319877 | A1 | 05 October 2023 |
| | | | | WO | 2022039669 | A1 | 24 February 2022 |
| | | | | KR | 20230051495 | A | 18 April 2023 |
| US | 2023239671 | A1 | 27 July 2023 | None | | | |
| WO | 2023068663 | A1 | 27 April 2023 | None | | | |
| WO | 2023097704 | A1 | 08 June 2023 | US | 2024322961 | A1 | 26 September 2024 |
| | | | | CN | 118339923 | A | 12 July 2024 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 202311037445